# EUROPEAN PATENT APPLICATION

(11) **EP 4 475 619 A1**
(43) Date of publication of application: **11.12.2024**
(21) Application number: 23749502.3
(22) Date of filing: 17.01.2023
(51) Int. Cl.: H04W 76/12, H04W 72/02, H04W 72/0457, H04W 72/54, H04W 76/15, H04W 84/12

(54) **COMMUNICATION DEVICE, COMMUNICATION METHOD, AND COMMUNICATION SYSTEM**

(30) Priority: 02.02.2022 JP 2022014936
(71) Applicant: Sony Group Corporation, Tokyo 108-0075 (JP)
(72) Inventor: WATANABE, Jun, Tokyo 108-0075 (JP); NAGAI, Naoki, Tokyo 108-0075 (JP); KAMINE, Yoshiaki, Tokyo 108-0075 (JP); TAIRA, Noriaki, Tokyo 108-0075 (JP); YANO, Yuichi, Tokyo 108-0075 (JP); SHIMIZU, Takahiro, Tokyo 108-0075 (JP)
(74) Representative: D Young & Co LLP
(86) International application number: PCT/JP2023/001087
(87) International publication number: WO 2023/149185

(57) **Abstract**

A communication device includes: a setting unit that establishes a plurality of radio links with a base station; and a communication control unit that transmits transmission data to an outside via the base station and a core network. A plurality of tunnels corresponding to the plurality of radio links is established between the base station and the core network, and the communication control unit transmits the transmission data over the plurality of radio links by distributed transmission in accordance with a predetermined condition.

## Description

### Field

The present disclosure relates to a communication device, a communication method, and a communication system.

### Background

Recent communication devices have various types of wireless communication functions. For example, recent communication devices have a wireless communication function of a cellular system such as 5G NR or a wireless communication function of a wireless LAN system such as Wi-Fi.

### Citation List

### Patent Literature

Patent Literature 1: JP 2021-114695 A
Patent Literature 2: JP 2021-125850 A

### Summary

### Technical Problem

A communication device is required to have high communication performance (for example, wide coverage, high throughput, high reliability, and low latency). Although communication devices in recent years have various types of wireless communication functions, high communication performance cannot be obtained only with various types of wireless communication functions.

In view of this, the present disclosure proposes a communication device, a communication method, and a communication system capable of achieving high communication performance.

Note that the above problem or target is merely one of a plurality of problems or targets that can be solved or achieved by a plurality of embodiments disclosed in the present specification.

### Solution to Problem

In order to solve the above problem, a communication device of the present embodiment includes: a setting unit that establishes a plurality of radio links with a base station; and a communication control unit that transmits transmission data to an outside via the base station and a core network, wherein a plurality of tunnels corresponding to the plurality of radio links is established between the base station and the core network, and the communication control unit transmits the transmission data over the plurality of radio links by distributed transmission in accordance with a predetermined condition.

### Brief Description of Drawings

FIG. 1 is a diagram illustrating an outline of a communication system of the present embodiment.
FIG. 2 is a diagram illustrating a configuration example of a communication system according to the embodiment of the present disclosure.
FIG. 3 is a diagram illustrating a configuration example of a server according to the embodiment of the present disclosure.
FIG. 4 is a diagram illustrating a configuration example of a management device according to the embodiment of the present disclosure.
FIG. 5 is a diagram illustrating a configuration example of a base station according to the embodiment of the present disclosure.
FIG. 6 is a diagram illustrating a configuration example of a communication device according to the embodiment of the present disclosure.
FIG. 7 is a diagram illustrating a configuration example of a terminal device according to the embodiment of the present disclosure.
FIG. 8 is a diagram illustrating an example of 5G architecture.
FIG. 9 is a diagram illustrating an outline of an operation of the communication system in a case where a user uses an IPv4 address.
FIG. 10 is a diagram illustrating an operation of the communication system in a case where a user uses the IPv4 address.
FIG. 11 is a diagram illustrating an outline of an operation of the communication system.
FIG. 12 is a diagram illustrating an outline of an operation of the communication system in a case where the user uses an IPv6 address.
FIG. 13 is a diagram illustrating an operation of the communication system in a case where the user uses the IPv6 address.
FIG. 14 is a diagram illustrating an operation of the communication system in a case where a user uses the IPv6 address.
FIG. 15 is a diagram illustrating a configuration of Scenario 1 of a throughput test.
FIG. 16 is a diagram illustrating a configuration of Scenario 2 of the throughput test.
FIG. 17 is a diagram illustrating a configuration of Scenario 3 of the throughput test.
FIG. 18 is a diagram illustrating a modification of the communication device.
FIG. 19 is a diagram illustrating another modification of the communication device.
FIG. 20 is a diagram illustrating another modification of the communication device.

### Description of Embodiments

Embodiments of the present disclosure will be described below in detail with reference to the drawings. Note that, in each of the following embodiments, the same parts are denoted by the same reference symbols, and a repetitive description thereof will be omitted.

Moreover, in the present specification and the drawings, a plurality of components having substantially the same functional configuration will be distinguished by attaching different numbers after the same reference numerals. For example, a plurality of configurations having substantially the same functional configuration are distinguished as necessary, such as terminal devices 50₁, 50₂, and 50₃. However, when it is not particularly necessary to distinguish between the plurality of components having substantially the same functional configuration, only the same reference numeral is given. For example, in a case where it is not necessary to particularly distinguish the terminal devices 50₁, 50₂, and 50₃, they are simply referred to as the terminal device 50.

One or more embodiments (including examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

The present disclosure will be described in the following order.
1. Overview
2. Configuration of communication system
   2-1. Configuration example of communication system
   2-2. Configuration example of server
   2-3. Configuration example of management device
   2-4. Configuration example of base station
   2-5. Configuration example of communication device
   2-6. Configuration example of terminal device
3. Network Architecture
4. Operation of communication system
   4-1. Case using IPv4 address
   4-2. Case using IPv6 address
5. Throughput test
6. Modification
7. Conclusion

### <<1. Overview>>

Radio access technologies (RAT) such as Long Term Evolution (LTE) and 5G New Radio (5G NR) have been studied in the 3rd Generation Partnership Project (3GPP). LTE and NR are a type of cellular communication technology, and enable mobile communication of terminal devices by using cellular arrangement of a plurality of areas covered by base stations.

A communication device is required to have high communication performance (for example, wide coverage, high throughput, high reliability, and low latency). However, the communication device might not be able to achieve high communication performance only with the wireless communication function of the cellular system.

This will be described using the local 5G as an example. The local 5G is a 5G network that can be individually used by local users (companies, local governments, etc.) according to their needs. When the user performs communication using the local 5G, the communication device needs to perform communication within a predetermined frequency band (hereinafter, referred to as a local 5G band). Examples of the local 5G band include a range 4.6 GHz to 4.9 GHz and a range 28.2 GHz to 29.1 GHz. Since the local 5G band is a limited band, it might not be possible, in communication by the communication device using the local 5G, to achieve a wide coverage or a high communication speed depending on a local 5G use environment.

Meanwhile, recent communication devices can use wireless communication functions other than the cellular system. For example, recent communication devices can use a wireless communication function using a wireless LAN system such as Wi-Fi in addition to a wireless communication function using a cellular system. Communication devices in recent years may include a Wi-Fi 6 (IEEE 802.11ax) communication function as a Wi-Fi communication function. Similarly to conventional Wi-Fi 5, Wi-Fi 6 can operate on a 2.4 GHz band and a 5 GHz band.

When a communication device has various types of wireless communication functions, there is a possibility that the communication device can achieve high communication performance. For example, when the communication device includes the Wi-Fi 6 wireless communication function in addition to the wireless communication function other than the cellular system, the communication device can use more available frequency bands, leading to a possibility of achieving high communication performance. However, it is not always possible to obtain high communication performance only with wireless communication functions of various systems.

Meanwhile, assumable techniques of aggregating a plurality of radio links include carrier aggregation (CA)/dual connectivity (DC) and LTE-WLAN aggregation (LWA)/enhanced LWA (eLWA). However, these methods currently do not support a 5G module, and even they come to support the 5G module, it is estimated to be costly.

Therefore, the communication system of the present embodiment establishes a plurality of GTP sessions corresponding to a plurality of radio links, and then performs distributed communication by the L3 (OSI reference model third layer/IP layer) technology. This is performed to enhance communication bands. Specifically, the above issue is to be solved by the following method.

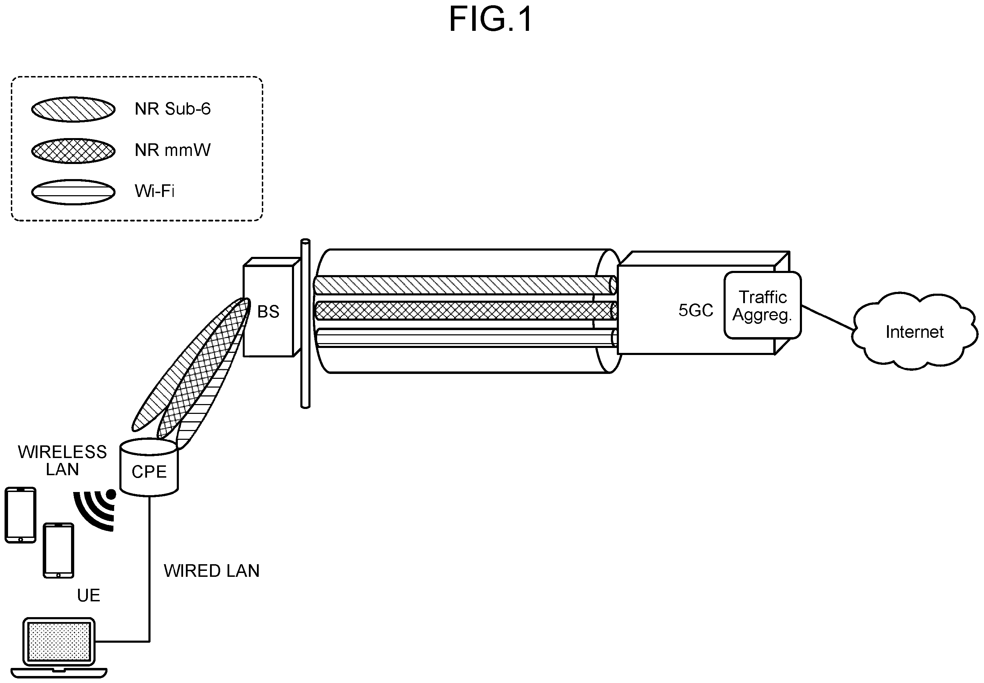

FIG. 1 is a diagram illustrating an outline of a communication system of the present embodiment. An example of the communication device according to the present embodiment is a Customer Premises Equipment (CPE) connected to a UE via a wired LAN or a wireless LAN. The communication device of the present embodiment is connected to the Internet via a base station (BS illustrated in FIG. 1) and a core network (5GC illustrated in FIG. 1). The communication device of the present embodiment has a plurality of wireless communication functions and is connected to the base station by a plurality of radio links. For example, the communication device is connected to the base station via the NR Sub-6 (4.8 GHz), the NR mmW (28 GHz), and Wi-Fi (5.6 GHz). The base station establishes, with the core network, a plurality of GPRS Tunneling Protocol Tunnels (GTP tunnels) corresponding to a plurality of radio links. The communication device transmits transmission data (for example, a plurality of packets) to an external device (for example, a server on the Internet) via the base station and the core network by using distributed communication over a plurality of radio links in accordance with a predetermined condition. At this time, the communication device may distribute traffic by using an IP multipath routing technology (for example, Equal Cost Multi Path (ECMP) at an IP layer. Furthermore, the communication device may distribute a plurality of packets to the external device over a plurality of radio links based on information such as a transmission source and a destination (distribution using 5-tuple hash).

This expands the communication band to be used, enabling the communication device of the present embodiment to achieve high communication performance (for example, wide coverage, high throughput, high reliability, or low latency).

The outline of the present embodiment has been described above. Hereinafter, a communication system according to the present embodiment will be described in detail.

### <<2. Configuration of communication system>>

Hereinafter, a configuration of a communication system 1 will be specifically described with reference to the drawings.

### <2-1. Configuration example of communication system>

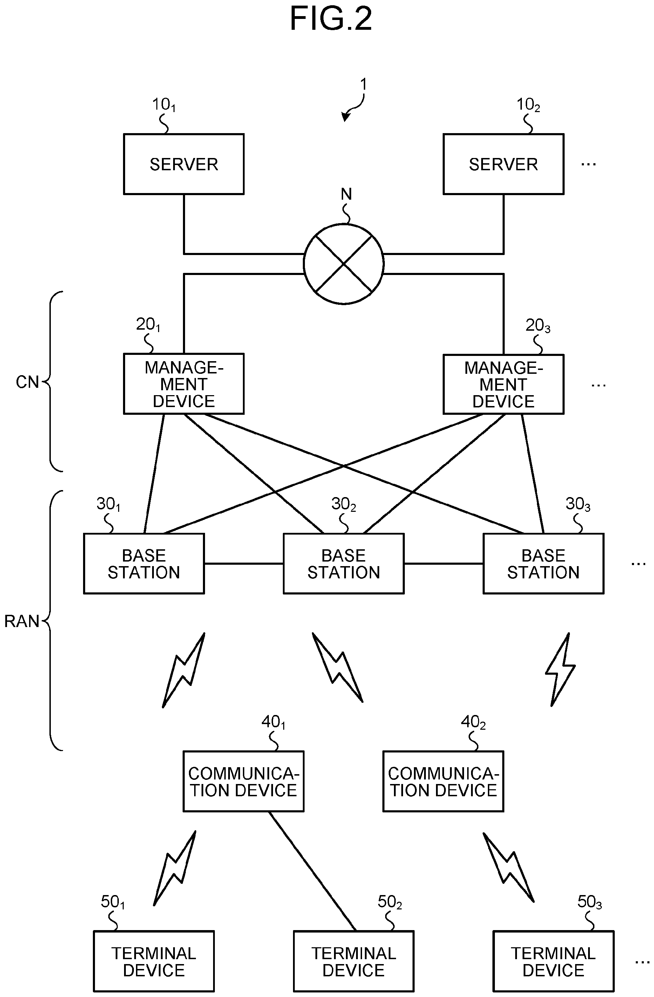

FIG. 2 is a diagram illustrating a configuration example of the communication system 1 according to the embodiment of the present disclosure. The communication system 1 includes a server 10, a management device 20, a base station 30, a communication device 40, and a terminal device 50. With individual devices constituting the communication system 1 operating in cooperation with each other, the communication system 1 provides a user with a wireless network capable of mobile communication. The wireless network of the present embodiment includes a radio access network and a core network, for example. In the present embodiment, the wireless communication device is a device having a wireless communication function, and corresponds to the device corresponds to the base station 30, the communication device 40, and the terminal device 50 in the example of FIG. 2.

The communication system 1 may include a plurality of servers 10, a plurality of management devices 20, a plurality of base stations 30, a plurality of communication devices 40, and a plurality of terminal devices 50. In the example of FIG. 2, the communication system 1 includes servers 10₁, 10₂, etc. as the server 10, management devices 20₂, 20₂, etc. as the management device 20, and base stations 30₁, 30₂, etc. as the base station 30. In addition, the communication system 1 includes communication devices 40₁, 40₂, etc., as the communication device 40, and terminal devices 50₁, 50₂, 50₃, etc., as the terminal device 50.

Captured data transmitted to the management device 20 is transmitted to the server 10 via a network N. Examples of the network N include communication networks such as a local area network (LAN), a wide area network (WAN), a telephone network (such as cellular network and a fixed-line telephone network), a regional Internet protocol (IP) network, and the Internet. The network N may include a wired network or a wireless network. In addition, the network N may include a core network.

Although only one network N is illustrated in the example of FIG. 2, different data networks may exist for each core network. The data network may be a service network of a telecommunications carrier, for example, an IP Multimedia Subsystem (IMS) network. Furthermore, the data network may be a private network such as an intranet.

The device in the figure may be considered as a device in a logical sense. That is, parts of the device in the drawing may be partially actualized by a virtual machine (VM), a container, a docker, or the like, and they may be implemented on physically the same piece of hardware.

The communication system 1 may be compatible with a radio access technology (RAT) such as Long Term Evolution (LTE) and New Radio (NR). LTE and NR are a type of cellular communication technology, and enable mobile communication of terminal devices by using cellular arrangement of a plurality of areas covered by base stations. A single base station may manage a plurality of cells. Furthermore, the communication system 1 may be a Broadband Wireless Access System (BWA) or a digital cordless telephone system.

In the following, it is assumed that "LTE" includes LTE-Advanced (LTE-A), LTE-Advanced Pro (LTE-A Pro), and Evolved Universal Terrestrial Radio Access (E-UTRA). In addition, "NR" includes New Radio Access Technology (NRAT) and Further E-UTRA (FE-UTRA). In addition, "LTE" and "NR" include radio access technologies standardized by the WiMAX forum or the XGP forum, using LTE and NR technologies as reference standards. In the following, a cell corresponding to LTE may be referred to as an LTE cell, and a cell corresponding to NR may be referred to as an NR cell.

NR is a radio access technology (RAT) as next generation (fifth generation) following LTE. The NR is a radio access technology that can support various use cases including enhanced mobile broadband (eMBB), massive machine type communications (mMTC), and Ultra-Reliable and Low Latency Communications (URLLC). NR is being studied with the aim of creating a technical framework that supports usage scenarios, requirements, and deployment scenarios for these use cases.

The radio access scheme used by the communication system 1 is not limited to LTE and NR, and may be other radio access methods using a radio access technology standardized by 3GPP such as Wideband Code Division Multiple Access (W-CDMA), a radio access technology standardized by 3GPP2 such as Code Division Multiple Access 2000 (cdma 2000), and a radio access technology standardized by WiMAX Forum, XGP Forum, IEEE 802.16 Committee, or the like. The communication system 1 may support Low Power Wide Area (LPWA) communication.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. Note that the LPWA communication used by the communication system 1 may be communication conforming to the LPWA standard. Examples of the LPWA standard include ELTRES, ZETA, SIGFOX, LoRaWAN, and NB-Iot. Needless to say, the LPWA standard is not to be limited thereto, and may be other LPWA standards.

Furthermore, the base station constituting the communication system 1 may be a terrestrial station or a non-terrestrial station. The non-terrestrial station may be a satellite station or an aircraft station. If the non-terrestrial station is a satellite station, the communication system 1 may be a Bent-pipe (Transparent) mobile satellite communication system.

In the present embodiment, the terrestrial station (also referred to as a terrestrial base station) refers to a base station (a relay station) installed on the ground. The "ground" represents not only a land but also a terrestrial location in a broad sense including underground, above-water, and underwater. Note that, in the following description, the description of "terrestrial station" may be referred to as a "gateway".

The base station in LTE may be referred to as Evolved Node B (eNodeB) or eNB. NR base stations may be referred to as gNodeB or gNB. In LTE and NR, a terminal device (also referred to as a mobile station, or terminal) may be referred to as user equipment (UE). The terminal device is a type of communication device, and is also referred to as a mobile station or a terminal.

In the present embodiment, the concept of the "communication device" includes not only a portable mobile device (terminal device) such as a mobile terminal but also a device installed in a structure or a mobile body. The structure or a mobile body itself may be regarded as a communication device. In addition, the concept of the communication device includes not only a terminal device but also a base station and a relay station. The communication device is a type of processing device and information processing device. The communication device can be paraphrased as a transmission device or a reception device.

Hereinafter, configurations of individual devices included in the communication system 1 will be specifically described. The configuration of each device described below is just an example. The configuration of each device may differ from the configuration below.

### <2-2. Configuration example of server>

First, a configuration of the server 10 will be described.

The server 10 is an information processing device (computer) that executes various types of processing based on a request from the terminal device 50 or the like. The server 10 may be a PC server, a midrange server, or a mainframe server.

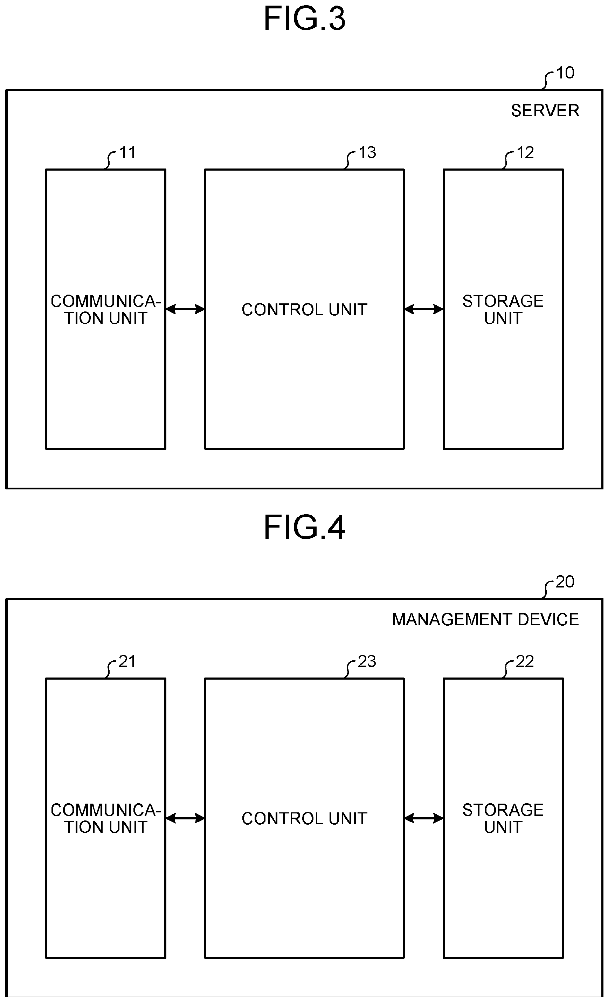

FIG. 3 is a diagram illustrating a configuration example of the server 10 according to the embodiment of the present disclosure. The server 10 includes a communication unit 11, a storage unit 12, and a control unit 13. Note that the configuration illustrated in FIG. 3 is a functional configuration, and the hardware configuration may be different from this. Furthermore, the functions of the server 10 may be installed in a distributed manner in a plurality of physically separated configurations. For example, the server 10 may be constituted with a plurality of server devices.

The communication unit 11 is a communication interface for communicating with other devices. The communication unit 11 may be a network interface, or may be a device connection interface. For example, the communication unit 11 may be a local area network (LAN) interface such as a network interface card (NIC), or may be a universal serial bus (USB) interface including a USB host controller, a USB port, and the like. Furthermore, the communication unit 11 may be a wired interface, or may be a wireless interface. The communication unit 11 functions as a communication means of the server 10. The communication unit 11 communicates with the terminal device 50 under the control of the control unit 13.

The storage unit 12 is a data readable/writable storage device such as dynamic random access memory (DRAM), static random access memory (SRAM), flash memory, or a hard disk. The storage unit 12 functions as a storage means of the server 10. The storage unit 12 stores, for example, captured data (for example, image data or metadata) transmitted from the communication device 40 via the base station 30.

The control unit 13 is a controller that controls individual units of the server 10. The control unit 13 is implemented by a processor such as a central processing unit (CPU) or a micro processing unit (MPU), for example. For example, the control unit 13 is implemented by execution of various programs stored in the storage device inside the server 10 by the processor using random access memory (RAM) or the like as a work area. Note that the control unit 13 may be implemented by an integrated circuit such as an application specific integrated circuit (ASIC) or a field programmable gate array (FPGA). The CPU, MPU, ASIC, and FPGA can all be regarded as controllers.

### <2-3. Configuration example of management device>

Next, a configuration of the management device 20 will be described.

The management device 20 is a device that manages a wireless network. For example, the management device 20 is a device that manages communication of the base station 30. The management device 20 may be a device having a function as a Mobility Management Entity (MME), for example. The management device 20 may be a device having a function as an Access and Mobility Management Function (AMF) and/or a Session Management Function (SMF). The functions of the management device 20 are not to be limited to the MME, the AMF, or the SMF. The management device 20 may be a device having a function as a Policy Control Function (PCF) or a Home Subscriber Server (HSS). The management device 20 may be a device having a function as a Network Slice Selection Function (NSSF), an Authentication Server Function (AUSF), or a Unified Data Management (UDM).

Note that the management device 20 may have a function of a gateway. For example, the management device 20 may have a function as a Serving Gateway (S-GW) or a Packet Data Network Gateway (P-GW). Furthermore, the management device 20 may have a function as a User Plane Function (UPF).

The core network includes a plurality of network functions. Each network function may be integrated into one physical device or distributed to a plurality of physical devices. That is, the management device 20 can be disposed in a plurality of devices as distributed arrangement. Furthermore, this distributed arrangement may be controlled to be performed dynamically. The base station 30 and the management device 20 constitute one network, and provide a wireless communication service to the terminal device 50. The management device 20 is connected to the Internet, and the terminal device 50 can use various services provided over the Internet via the base station 30.

Note that the management device 20 does not necessarily have to be a device constituting a core network. For example, it is assumed that the core network is a core network of Wideband Code Division Multiple Access (W-CDMA) or Code Division Multiple Access 2000 (cdma2000). At this time, the management device 20 may be a device that functions as a Radio Network Controller (RNC).

FIG. 4 is a diagram illustrating a configuration example of the management device 20 according to an embodiment of the present disclosure. The management device 20 includes a communication unit 21, a storage unit 22, and a control unit 23. Note that the configuration illustrated in FIG. 4 is a functional configuration, and the hardware configuration may be different from this. Furthermore, the functions of the management device 20 may be implemented in a statically or dynamically distributed form in a plurality of physically separated configurations. For example, the management device 20 may be constituted with a plurality of server devices.

The communication unit 21 is a communication interface for communicating with other devices. The communication unit 21 may be a network interface or a device connection interface. For example, the communication unit 21 may be a local area network (LAN) interface such as a network interface card (NIC), or may be a universal serial bus (USB) interface including a USB host controller, a USB port, and the like. Furthermore, the communication unit 21 may be a wired interface or a wireless interface. The communication unit 21 functions as a communication means of the management device 20. The communication unit 21 communicates with the base station 30 and the like under the control of the control unit 23.

The storage unit 22 is a data readable/writable storage device such as dynamic random access memory (DRAM), static random access memory (SRAM), a flash drive, or a hard disk. The storage unit 22 functions as a storage means in the management device 20. The storage unit 22 stores, for example, a connection state of the communication device 40. For example, the storage unit 22 stores a Radio Resource Control (RRC) state or an EPS connection management (ECM) state or a 5G system connection management (CM) state of the communication device 40. The storage unit 22 may function as a unit referred to as "home memory" that stores positional information of the communication device 40.

The control unit 23 is a controller that controls individual components of the management device 20. The control unit 23 is implemented by a processor such as a central processing unit (CPU), a micro processing unit (MPU), or a graphics processing unit (GPU), for example. For example, the control unit 23 is actualized by execution of various programs stored in the storage device inside the management device 20 by the processor using random access memory (RAM) or the like as a work area. Note that the control unit 23 may be implemented by an integrated circuit such as an application specific integrated circuit (ASIC) or a field programmable gate array (FPGA). The CPU, MPU, GPU, ASIC, and FPGA can all be regarded as controllers.

### <2-4. Configuration example of base station>

Next, a configuration of the base station 30 will be described.

The base station 30 is a wireless communication device that performs wireless communication with the terminal device 50. The base station 30 may be configured to perform wireless communication with the terminal device 50 via the communication device 40, or may be configured to directly perform wireless communication with the terminal device 50.

The base station 30 is a type of communication device. More specifically, the base station 30 is a device corresponding to a radio base station (Base Station, Node B, eNB, gNB, etc.) or a radio access point. The base station 30 may be a radio relay station. Furthermore, the base station 30 may be one or a plurality of (or all) remote installation devices of a distributed radio base station referred to as a Remote Radio Head (RRH) or a Radio Unit (RU). Such a remote installation device may be integrated with an antenna like an antenna integrated radio facility, but is not necessarily to use integration, or may be an antenna integrated radio facility having a massive Multi Input Multi Output (Massive MIMO) radio communications technology. The portion of the distributed radio base station may also be referred to as a node in a Distributed Antenna System (DAS). Furthermore, the base station 30 may be a receiving station such as a Field Pickup Unit (FPU). In addition, the base station 30 may be an Integrated Access and Backhaul (IAB) donor node or an IAB relay node that provides a radio access channel and a radio backhaul channel by using time division multiplexing, frequency division multiplexing, or space division multiplexing.

Note that the radio access technology used by the base station 30 may be a cellular communication technology or a wireless LAN technology. Needless to say, the radio access technology used by the base station 30 is not limited thereto, and may be other radio access technologies. For example, the radio access technology used by the base station 30 may be a low power wide area (LPWA) communication technology. Needless to say, the wireless communication used by the base station 30 may be wireless communication using millimeter waves. Furthermore, the wireless communication used by the base station 30 may be wireless communication using radio waves or wireless communication (optical wireless communication) using infrared rays or visible light.

The base station 30 may be capable of Non-Orthogonal Multiple Access (NOMA) communication with the terminal device 50. Here, NOMA communication refers to communication (transmission, reception, or both) using nonorthogonal resources. Note that the base station 30 may be capable of performing NOMA communication with another base station 30.

The base station 30 may be capable of communicating with each other via a base station-core network interface (for example, NG Interface, S1 Interface, or the like). This interface may be implemented as wired or wireless interface. Furthermore, the base stations may be capable of communicating with each other via an interbase station interface (for example, Xn Interface, X2 Interface, S1 Interface, F1 Interface, or the like). This interface may be implemented as wired or wireless interface.

Note that the concept of the base station includes not only a donor base station but also a relay base station (also referred to as a relay station). For example, the relay base station may be any one of RF Repeater, Smart Repeater, and Intelligent Surface. Furthermore, a base station conceptually includes not only a structure having a function of a base station but also a device installed in the structure.

Examples of the structure include a building such as a high-rise building, a house, a steel tower, a station facility, an airport facility, a harbor facility, an office building, a school building, a hospital, a factory, a commercial facility, or a stadium. The concept of the structure includes not only buildings but also non-building structures such as tunnels, bridges, dams, fences, and steel columns, as well as facilities such as cranes, gates, and windmills. In addition, a structure conceptually includes not only land-based (ground-based, in a narrow sense) structures or underground structures but also structures on the water, such as a jetty and a mega-float, and underwater structures such as an ocean observation facility. The base station may be referred to as an information processing device.

The base station 30 may be a donor station or a relay station. The base station 30 may be a fixed station or a mobile station. The mobile station is a wireless communication device (for example, a base station) configured to be movable. At this time, the base station 30 may be a device installed on a mobile body, or may be a mobile body itself. For example, a relay station having mobility can be regarded as the base station 30 as a mobile station. In addition, a device designed to have mobility, such as an Unmanned Aerial Vehicle (UAV) represented by a drone, or a smartphone, and having a function of a base station (at least a part of the function of a base station) also corresponds to the base station 30 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, and a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

Furthermore, the base station 30 may be a terrestrial base station (terrestrial station) installed on the ground. For example, the base station 30 may be a base station disposed on a structure on the ground, or may be a base station installed in a mobile body moving on the ground. More specifically, the base station 30 may be an antenna installed in a structure such as a building and a signal processing device connected to the antenna. Note that the base station 30 may be a structure or a mobile body itself. The "ground" represents not only a land (ground in a narrow sense) but also a terrestrial location in a broad sense including underground, above-water, and underwater. Note that the base station 30 is not limited to a terrestrial base station. For example, in a case where the communication system 1 is a satellite communication system, the base station 30 may be an aircraft station. From the perspective of a satellite station, an aircraft station located on the earth is a terrestrial station.

Note that the base station 30 is not limited to a terrestrial station. The base station 30 may be a non-terrestrial base station (non-terrestrial station) capable of floating in the air or space. For example, the base station 30 may be an aircraft station or a satellite station.

The satellite station is a satellite station capable of floating outside the atmosphere. The satellite station may be a device mounted on a space mobile body such as an artificial satellite, or may be a space mobile body itself. A space mobile body is a mobile body that moves outside the atmosphere. Examples of the space mobile body include artificial bodies such as artificial satellites, spacecraft, space stations, and probes.

The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. Accordingly, the satellite station may be a device mounted on a low earth orbiting satellite, a medium earth orbiting satellite, a geostationary earth orbiting satellite, or a highly elliptical orbiting satellite.

The aircraft station is a wireless communication device capable of floating in the atmosphere, such as an aircraft. The aircraft station may be a device mounted on an aircraft or the like, or may be an aircraft itself. The concept of the aircraft includes not only heavy aircraft such as an airplane and a glider but also light aircraft such as a balloon and an airship. In addition, the concept of the aircraft includes not only a heavy aircraft and a light aircraft but also a rotorcraft such as a helicopter and an auto-gyro. Note that the aircraft station (or an aircraft on which an aircraft station is mounted) may be an unmanned aerial vehicle such as a drone.

Note that the concept of the unmanned aerial vehicle also includes an unmanned aircraft system (UAS) and a tethered UAS. The concept of unmanned aerial vehicles also includes a Lighter-than-Air (LTA) unmanned aircraft system (UAS) and a Heavier-than-Air (HTA) unmanned aircraft system (UAS). Other concepts of unmanned aerial vehicles also include High Altitude Platforms (HAPs) unmanned aircraft system (UAS).

The coverage of the base station 30 may be large such as a macro cell or small such as a pico cell. Needless to say, the coverage of the base station 30 may be extremely small such as a femto cell. Furthermore, the base station 30 may have a beamforming capability. In this case, the base station 30 may form a cell or a service area for each beam.

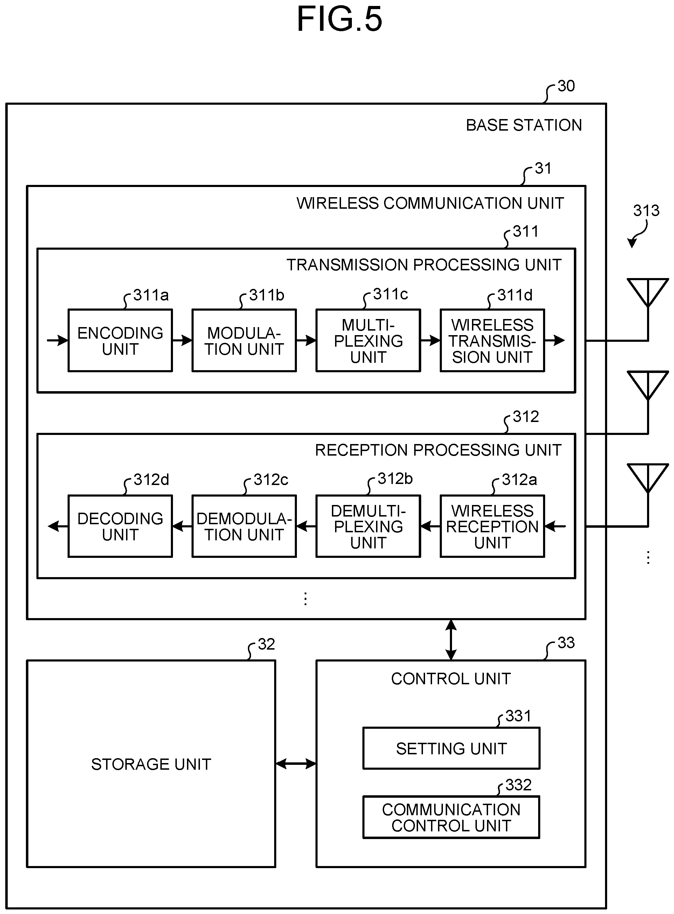

FIG. 5 is a diagram illustrating a configuration example of the base station 30 according to the embodiment of the present disclosure. The base station 30 includes a wireless communication unit 31, a storage unit 32, and a control unit 33. The configuration illustrated in FIG. 5 is a functional configuration, and the hardware configuration may be different from this. Furthermore, the functions of the base station 30 may be implemented in a distributed form in a plurality of physically separated configurations.

The wireless communication unit 31 is a signal processing unit for performing wireless communication with other wireless communication devices (for example, the communication device 40). The wireless communication unit 31 operates under the control of the control unit 33. The wireless communication unit 31 may support one or a plurality of radio access methods. For example, the wireless communication unit 31 supports both NR and LTE. The wireless communication unit 31 may support W-CDMA or cdma2000 in addition to NR and LTE. The wireless communication unit 31 may support an automatic retransmission technology such as Hybrid Automatic Repeat reQuest (HARQ). Furthermore, the wireless communication unit 31 may support a wireless communication function of a wireless LAN system such as Wi-Fi, in addition to the wireless communication function of the cellular system. The communication function of the wireless LAN system may be compatible with current Wi-Fi 6 (IEEE 802.11ax), or may be compatible with a conventional system prior to Wi-Fi 5, such as IEEE 802.11a, IEEE 802.11b, IEEE 802.11g, IEEE 802.11n, IEEE 802.11ac. In addition, the wireless LAN system may be a wireless LAN system that will be standardized/regulated in the future in the Wi-Fi Alliance or the IEEE 802.11 committee.

The wireless communication unit 31 includes a transmission processing unit 311, a reception processing unit 312, and an antenna 313. The wireless communication unit 31 may include a plurality of the transmission processing units 311, a plurality of the reception processing units 312, and a plurality of the antennas 313. In a case where the wireless communication unit 31 supports a plurality of radio access methods, individual portions of the wireless communication unit 31 can be configured separately for each of the radio access methods. For example, the transmission processing unit 311 and the reception processing unit 312 may be separately configured for LTE and NR. Furthermore, the antenna 313 may include a plurality of antenna elements (for example, a plurality of patch antennas). In this case, the wireless communication unit 31 may be configured to be capable of beamforming. The wireless communication unit 31 may be configured to be able to perform polarization beamforming using vertically polarized waves (V-polarized waves) and horizontally polarized waves (H-polarized waves).

The transmission processing unit 311 performs transmission processing of downlink control information and downlink data. The transmission processing unit 311 codes the downlink control information and the downlink data input from the control unit 33 by using a coding method such as block coding, convolutional coding, or turbo coding. The coder may perform coding using a polar code or a Low Density Parity Check (LDPC) code. The transmission processing unit 311 modulates the coded bits by a predetermined modulation scheme such as BPSK, QPSK, 16 QAM, 64 QAM, or 256 QAM. In this case, the signal points on the constellation do not necessarily have to be equidistant. The constellation may be a non-uniform constellation (NUC). The transmission processing unit 311 multiplexes the modulation symbol of each of channels and the downlink reference signal and allocates the multiplexed signals on a predetermined resource element. Subsequently, the transmission processing unit 311 performs various types of signal processing on the multiplexed signal. For example, the transmission processing unit 311 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 311 is transmitted from the antenna 313.

The reception processing unit 312 processes an uplink signal received via the antenna 313. For example, the reception processing unit 312 performs processing on the uplink signal, such as down-conversion, removal of unnecessary frequency components, amplification level control, orthogonal demodulation, conversion to digital signal, removal of guard interval (cyclic prefix), and frequency domain signal extraction using fast Fourier transform. The reception processing unit 312 then demultiplexes an uplink channel such as a physical uplink shared channel (PUSCH) or a physical uplink control channel

(PUCCH) and an uplink reference signal from the signal that has undergone these processing procedures. Subsequently, the reception processing unit 312 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 256 QAM. In this case, the signal points on the constellation do not necessarily have to be equidistant. The constellation may be a non-uniform constellation (NUC). Subsequently, the reception processing unit 312 performs decoding processing on the coded bits of the demodulated uplink channel. The decoded uplink data and uplink control information are output to the control unit 33.

The antenna 313 is an antenna device (antenna unit) that performs mutual conversion of a current and a radio wave. The antenna 313 may include one antenna element (for example, one patch antenna) or may include a plurality of antenna elements (for example, a plurality of patch antennas). In a case where the antenna 313 includes a plurality of antenna elements, the wireless communication unit 31 may be configured to be capable of beamforming. For example, the wireless communication unit 31 may control the directivity of a wireless signal using a plurality of antenna elements to generate a directional beam. The antenna 313 may be a dual polarized antenna. When the antenna 313 is a dual polarized antenna, the wireless communication unit 31 may use a vertically polarized wave (V polarized wave) and a horizontally polarized wave (H polarized wave) when transmitting radio signals. Subsequently, the wireless communication unit 31 may control the directivity of the wireless signal transmitted using the vertically polarized wave and the horizontally polarized wave. Furthermore, the wireless communication unit 31 may transmit and receive spatially multiplexed signals via a plurality of layers including a plurality of antenna elements.

The storage unit 32 is a data readable/writable storage device such as DRAM, SRAM, a flash drive, and a hard disk. The storage unit 32 functions as a storage means in the base station 30.

The control unit 33 is a controller that controls individual components of the base station 30. The control unit 33 is implemented by a processor such as a central processing unit (CPU) or a micro processing unit (MPU), for example. For example, the control unit 33 is implemented by execution of various programs stored in the storage device inside the base station 30 by the processor using random access memory (RAM) or the like as a work area. Note that the control unit 33 may be implemented by an integrated circuit such as an application specific integrated circuit (ASIC) or a field programmable gate array (FPGA). The CPU, MPU, ASIC, and FPGA can all be regarded as controllers. Furthermore, the control unit 33 may be implemented by a graphics processing unit (GPU) in addition to or instead of the CPU. The control unit 33 includes a setting unit 331 and a communication control unit 332. The operations of the setting unit 331 and the communication control unit 332 may be similar to operations of a setting unit 431 and a communication control unit 432 of the communication device 40 described below. Individual blocks (setting unit 331 and communication control unit 332) constituting the control unit 33 are functional blocks individually indicating functions of the control unit 33. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 33 may be configured in a functional unit different from the above-described functional block. The functional block may be configured by using any method.

In some embodiments, the concept of a base station may be constituted with a collection of a plurality of physical or logical devices. For example, in the present embodiment, the base station may be classified into a plurality of devices such as a Baseband Unit (BBU) and a Radio Unit (RU). The base station may be interpreted as an assembly of the plurality of devices. In addition, the base station may be either or both of a BBU and an RU. The BBU and the RU may be connected by a predetermined interface (for example, an enhanced Common Public Radio Interface (eCPRI)). The RU may be referred to as a Remote Radio Unit (RRU) or a Radio DoT (RD). The RU may correspond to a gNB Distributed Unit (gNB-DU) described below. The BBU may correspond to a gNB Central Unit) (gNB-CU) described below. Alternatively, the RU may be a wireless device connected to a gNB-DU described below. The gNB-CU, the gNB-DU, and the RU connected to the gNB-DU may be configured to conform to an Open Radio Access Network (O-RAN). The RU may be a device integrally formed with an antenna. An antenna (for example, an antenna integrally formed with an RU) included in the base station may adopt an Advanced Antenna System and support MIMO (for example, FD-MIMO) or beamforming. For example, the antenna included in the base station may include 64 transmitting antenna ports and 64 receiving antenna ports.

In addition, the antenna mounted on the RU may be an antenna panel including one or more antenna elements, and the RU may include one or more antenna panels. For example, the RU may include two types of antenna panels of a horizontally polarized antenna panel and a vertically polarized antenna panel, or two types of antenna panels of a clockwise (right-hand) circularly polarized antenna panel and a counterclockwise (left-hand) circularly polarized antenna panel. In addition, the RU may form and control an independent beam for each antenna panel.

The plurality of base stations may be connected to each other. One or the plurality of base stations may be included in a Radio Access Network (RAN). That is, the base station may be simply referred to as a RAN, a RAN node, an Access Network (AN), or an AN node. RAN in LTE may be referred to as Enhanced Universal Terrestrial R_AN (EUTR_AN). In addition, RAN in NR may be referred to as NGR_AN. RAN in W-CDMA (UMTS) may be referred to as UTRAN.

The base station in LTE may be referred to as Evolved Node B (eNodeB) or eNB. That is, EUTRAN includes one or a plurality of eNodeB (eNB). NR base stations may be referred to as gNodeB or gNB. At this time, NGR_AN contains one or a plurality of gNBs. EUTR_AN may include gNB (en-gNB) connected to the core network (EPC) in LTE communication systems (EPS). Similarly, NGR_AN may include an ng-eNB connected to the core network 5GC in a 5G communication system (5GS).

When the base station is eNB, gNB, or the like, the base station may be referred to as 3GPP access. Furthermore, when the base station is a radio access point, the base station may be referred to as non-3GPP access. The base station may be an optical link device or remote installation device referred to as a Remote Radio Head (RRH) or a Radio Unit (RU). Furthermore, in a case where the base station is a gNB, the base station may be a combination of the gNB-CU and the gNB-DU described above, or may be any one of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an access stratum. On the other hand, the gNB-DU hosts a plurality of lower layers (for example, radio link control (RLC), Medium Access Control (MAC), and Physical Layer (PHY)) in an access stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), some configurations such as IE: cellGroupConfig may be generated by the gNB-DU, while the remaining configurations may be generated by the gNB-CU, for example. These configurations may be transmitted and received through an F1 interface described below.

The base station may be configured to be able to communicate with another base station. For example, when a plurality of base stations is eNB each or a combination of eNBs and en-gNBs, the base stations may be connected to each other by an X2 interface. Furthermore, when a plurality of base stations is gNB each or a combination of gn-eNB and gNB, the devices may be connected to each other by an Xn interface. Furthermore, when a plurality of base stations is a combination of gNB CU and gNB DU, the devices may be connected to each other by the F1 interface described above. The message/information (for example, RRC signaling, MAC control element (MAC CE), or DCI) described below may be transmitted between a plurality of base stations via the X2 interface, the Xn interface, or the F1 interface, for example.

The cell provided by the base station may be referred to as a serving cell. The serving cell conceptually includes a primary cell (PCell) and a secondary cell (SCell). When dual connectivity is configured for the UE (for example, the terminal device 50), the PCell provided by a Master Node (MN) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity.

The serving cell may include a Primary Secondary Cell or Primary SCG Cell (PSCell). In a case where dual connectivity is configured in the UE, the PSCell and the zero or one or more SCells provided by a secondary node (SN) may be referred to as Secondary Cell Group (SCG). Unless specially configured (for example, PUCCH on SCell), a physical uplink control channel (PUCCH) is transmitted in the PCell and the PSCell, but is not transmitted in the SCell. In addition, a radio link failure is also detected in the PCell and the PSCell, but is not detected in the SCell (need not be detected). In this manner, since the PCell and the PSCell have a special role in the serving cell, these cells are also referred to as Special Cells (SpCells).

One cell may be associated with one downlink component carrier and one uplink component carrier. In addition, the system bandwidth corresponding to one cell may be divided into a plurality of bandwidth parts (BWPs). In this case, one or a plurality of BWPs may be configured for the UE, and one BWP may be used for the UE as an active BWP. In addition, radio resources (for example, a frequency band, a numerology (subcarrier spacing), and a slot format (slot configuration)) usable by the terminal device 50 may be different for each cell, each component carrier, or each BWP.

### <2-5. Configuration example of communication device>

Next, a configuration of the communication device 40 will be described.

The communication device 40 is a device that relays communication between the base station 30 and the terminal device 50. For example, the communication device 40 is a Customer Premises Equipment (CPE). The communication device 40 may be another type of relay station. Furthermore, the communication device 40 may be a device referred to as a smartphone, a mobile router, a personal digital assistant (PDA), a module, or the like, which is capable of wireless communication with the base station 30.

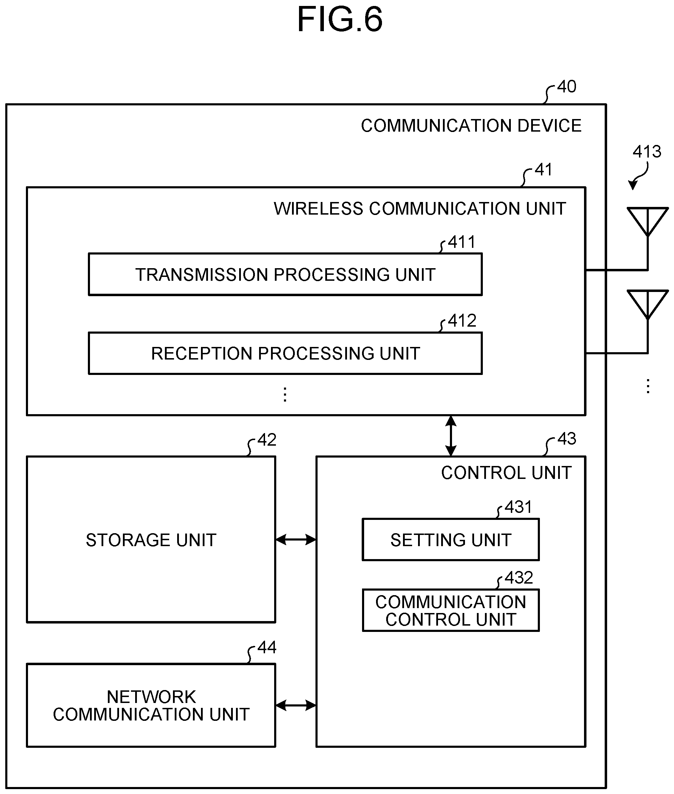

FIG. 6 is a diagram illustrating a configuration example of the communication device 40 according to the embodiment of the present disclosure. The communication device 40 includes a wireless communication unit 41, a storage unit 42, a control unit 43, and a network communication unit 44. Note that the configuration illustrated in FIG. 6 is a functional configuration, and the hardware configuration may be different from this. The functions of the communication device 40 may be implemented in a distributed manner in a plurality of physically separated configurations.

The wireless communication unit 41 is a wireless communication interface that performs wireless communication with other wireless communication devices (for example, the base station 30, the terminal device 50, and another communication device 40). The wireless communication unit 41 may support one or a plurality of radio access methods. For example, the wireless communication unit 41 supports both NR and LTE. The wireless communication unit 41 may support W-CDMA or cdma2000 in addition to NR and LTE. The wireless communication unit 41 includes a transmission processing unit 411, a reception processing unit 412, and an antenna 413. The wireless communication unit 41 may include a plurality of the transmission processing units 411, a plurality of the reception processing units 412, and a plurality of the antennas 413. Furthermore, the wireless communication unit 41 may also support a wireless communication function of a wireless LAN system such as Wi-Fi in addition to the wireless communication function of the cellular system. The communication function of the wireless LAN system may be compatible with current Wi-Fi 6 (IEEE 802.11ax), or may be compatible with a conventional system prior to Wi-Fi 5, such as IEEE 802.11a, IEEE 802.11b, IEEE 802.11g, IEEE 802.11n, IEEE 802.11ac. In addition, the wireless LAN system may be a wireless LAN system that will be standardized/regulated in the future in the Wi-Fi Alliance or the IEEE 802.11 committee. In a case where the wireless communication unit 41 supports a plurality of radio access methods, individual portions of the wireless communication unit 41 can be configured separately for each of the radio access methods. For example, the transmission processing unit 411 and the reception processing unit 412 may be separately configured for LTE, NR, and wireless LAN. The configurations of the transmission processing unit 411, the reception processing unit 412, and the antenna 413 may be similar to the configurations of the transmission processing unit 311, the reception processing unit 312, and the antenna 313 of the base station 30, respectively.

The storage unit 42 is a data readable/writable storage device such as DRAM, SRAM, a flash drive, and a hard disk. The storage unit 42 functions as a storage means for the communication device 40.

The control unit 43 is a controller that controls individual parts of the communication device 40. The control unit 43 is actualized by a processor such as a CPU, an MPU, and a GPU, for example. For example, the control unit 43 is actualized by a processor executing various programs stored in a storage device inside the communication device 40 using RAM or the like as a work area. The control unit 43 may be actualized by an integrated circuit such as an ASIC or an FPGA. The CPU, MPU, GPU, ASIC, and FPGA can all be regarded as controllers. The control unit 43 may be implemented by a GPU in addition to or instead of the CPU.

The control unit 43 includes a setting unit 431 and a communication control unit 432. Individual blocks (setting unit 431 and communication control unit 432) constituting the control unit 43 are functional blocks individually indicating functions of the control unit 43. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 43 may be configured in a functional unit different from the above-described functional block. The functional block may be configured by using any method.

The network communication unit 44 is a communication interface for communicating with other devices. For example, the network communication unit 44 may be a Local Area Network (LAN) interface such as a Network Interface Card (NIC). Furthermore, the network communication unit 44 may be a wired interface or a wireless interface.

### <2-6. Configuration example of terminal device>

Next, a configuration of the terminal device 50 will be described.

The terminal device 50 is a wireless communication device that performs wireless communication with other communication devices such as the communication device 40. Examples of the terminal device 50 include a mobile phone, a smart device (smartphone or tablet), a personal digital assistant (PDA), or a personal computer. Furthermore, the terminal device 50 may be a device such as a business camera equipped with a communication function, or may be a motorcycle, a moving relay vehicle, or the like, equipped with communication equipment such as a Field Pickup Unit (FPU). The terminal device 50 may be a Machine to Machine (M2M) device, a Device to Device (D2D) device, or an Internet of Things (IoT) device.

The terminal device 50 may be capable of NOMA communication with other communication devices (for example, the base station 30, the communication device 40, and another terminal device 50). The terminal device 50 may be able to use an automatic retransmission technology such as HARQ when communicating with the base station 30. The terminal device 50 may be capable of sidelink communication with another terminal device 50. The terminal device 50 may be capable of using the automatic retransmission technology such as HARQ also at the time of performing sidelink communication. The terminal device 50 may also be capable of NOMA communication in the communication (sidelink) with another terminal device 50. The terminal device 50 may be capable of LPWA communication with other communication devices (for example, the base station 30, the communication device 40, and another terminal device 50). In addition, the wireless communication used by the terminal device 50 may be wireless communication using millimeter waves. The wireless communication (including sidelink communication) used by the terminal device 50 may be wireless communication using radio waves or wireless communication using infrared rays or visible light (optical wireless communication).

The terminal device 50 may be a mobile device. The mobile device is a movable wireless communication device. At this time, the terminal device 50 may be a wireless communication device installed on a mobile body, or may be the mobile body itself. For example, the terminal device 50 may be a vehicle that moves on a road, such as an automobile, a bus, a truck, or a motorbike, may be a vehicle traveling on a rail installed in the track of a train or the like, or may be a wireless communication device mounted on the vehicle. The mobile body may be a mobile terminal, or may be a mobile body that moves on land (on the ground in a narrow sense), in the ground, on water, or under water. The mobile body may be a moving object that moves inside the atmosphere, such as a drone, a helicopter, or an aircraft, or may be a moving object that moves outside the atmosphere, such as an artificial satellite, or an object such as a flying object, a stationary object, or a quasi-stationary object in space.

The terminal device 50 may perform communication while being simultaneously connected to a plurality of base stations or a plurality of cells. For example, when one base station supports a communication area via a plurality of cells (for example, pCell and sCell), it is possible to aggregate the plurality of cells and communicate between the base station 30 and the terminal device 50 by using a carrier aggregation (CA) technology, a dual connectivity (DC) technology, or a multi-connectivity (MC) technology. Alternatively, the terminal device 50 and the plurality of base stations 30 can communicate with each other by a Coordinated Multi-Point Transmission and Reception (CoMP) technology via cells of different base stations 30.

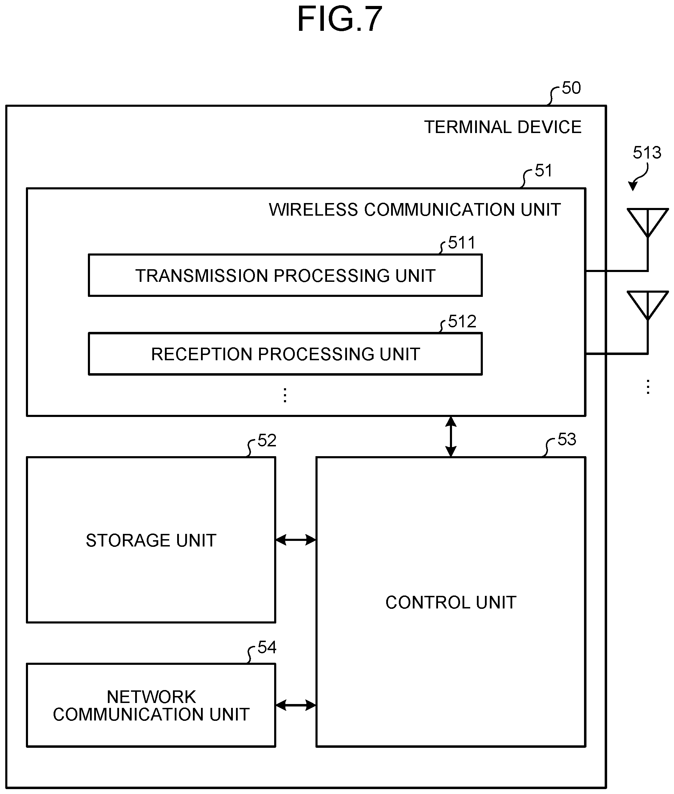

FIG. 7 is a diagram illustrating a configuration example of the terminal device 50 according to the embodiment of the present disclosure. The terminal device 50 includes a wireless communication unit 51, a storage unit 52, a control unit 53, and a network communication unit 54. Note that the configuration illustrated in FIG. 7 is a functional configuration, and the hardware configuration may be different from this. The functions of the terminal device 50 may be implemented in a distributed manner in a plurality of physically separated configurations.

The wireless communication unit 51 is a signal processing unit for performing wireless communication with other wireless communication devices (for example, the communication device 40). The wireless communication unit 51 operates under the control of the control unit 53. The wireless communication unit 51 includes a transmission processing unit 511, a reception processing unit 512, and an antenna 513. The configurations of the wireless communication unit 51, the transmission processing unit 511, the reception processing unit 512, and the antenna 513 may be similar to the configurations of the wireless communication unit 31, the transmission processing unit 311, the reception processing unit 312, and the antenna 313 of the base station 30, respectively. The wireless communication unit 51 may be configured to be capable of beamforming similarly to the wireless communication unit 31. Similarly to the wireless communication unit 31, the wireless communication unit 51 may be capable of transmitting and receiving spatially multiplexed signals.

The storage unit 52 is a data readable/writable storage device such as DRAM, SRAM, a flash drive, and a hard disk. The storage unit 52 functions as a storage means in the terminal device 50.

The control unit 53 is a controller that controls individual parts of the terminal device 50. The control unit 53 is actualized by a processor such as a CPU or an MPU, for example. For example, the control unit 53 is implemented by a processor executing various programs stored in a storage device inside the terminal device 50 using RAM or the like as a work area. Note that the control unit 53 may be actualized by an integrated circuit such as an ASIC or an FPGA. The CPU, MPU, ASIC, and FPGA can all be regarded as controllers. The control unit 53 may be implemented by a GPU in addition to or instead of the CPU.

The network communication unit 54 is a communication interface for communicating with other devices. For example, the network communication unit 54 may be a Local Area Network (LAN) interface such as a Network Interface Card (NIC). The network communication unit 54 may be a wired interface or a wireless interface.

### <<3. Network Architecture>>

The configuration of the communication system 1 has been described above. Next, a network architecture applicable to the communication system 1 of the present embodiment will be described. First, an architecture of a fifth generation mobile communication system (5G) will be described as an example of a core network CN of the communication system 1.

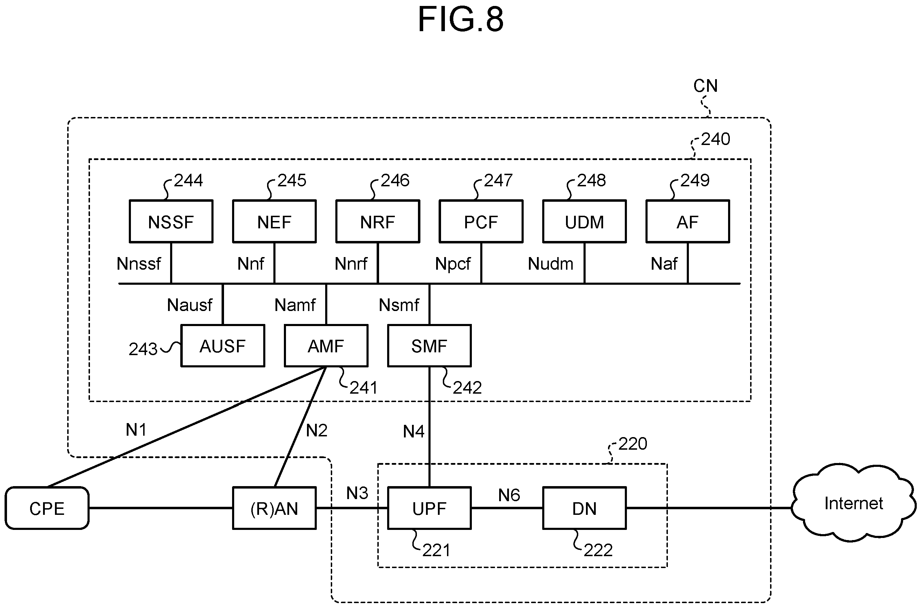

FIG. 8 is a diagram illustrating an example of 5G architecture. The core network CN of 5G is also referred to as 5G Core (5GC)/Next Generation Core (NGC). Hereinafter, the core network CN of 5G is also referred to as a 5GC/NGC. The core network CN is connected to a communication device such as Customer Premises Equipment (CPE) via the (R)AN. An example of the CPE is the communication device 40.

The (R)AN has a function of enabling the connection to a radio access network (RAN) and the connection to an Access Network (AN) other than RAN. The (R)AN includes a base station referred to as a gNB or an ng-eNB.

The core network CN mainly performs connection permission and session management when the Customer Premises Equipment (CPE) is to be connected to the network. The core network CN may include a user plane function group 220 and a control plane function group 240.

The user plane function group 220 includes a user plane function (UPF) 221 and a data network (DN) 222. The UPF 221 has a function of user plane processing. The UPF 221 includes a routing/forwarding function of data handled in the user plane. The DN 222 has a function of providing an entity, such as a Mobile Network Operator (MNO), which provides a connection to an operator's own service, providing an Internet connection, or providing a connection to a third party service. In this manner, the user plane function group 220 plays a role of a gateway as a boundary between the core network CN and the Internet.

The control plane function group 240 includes an access management function (AMF) 241, a session management function (SMF) 242, an authentication server function (AUSF) 243, a network slice selection function (NSSF) 244, a network exposure function (NEF) 245, a network repository function (NRF) 246, a policy control function (PCF) 247, a unified data management (UDM) 248, and an application function (AF) 249.

The AMF 241 has functions such as registration processing, connection management, and mobility management regarding the CPE. The SMF 242 has functions such as session management and IP allocation and management of the CPE. The AUSF 243 has an authentication function. The NSSF 244 has a function related to selection of a network slice. The NEF 245 has a function of providing a capability and an event of a network function to a third party, the AF 249, or an edge computing function.

The NRF 246 has a function of discovering network functions and holding network function profiles. The PCF 247 has a function of policy control. The UDM 248 has functions of generating 3GPP AKA authentication information and user ID processing. The AF 249 has a function of providing a service in interaction with the core network.

For example, the control plane function group 240 acquires information from the UDM 248 storing subscriber information of the CPE, and determines whether the CPE is permitted to connect to the network. In this determination, the control plane function group 240 uses the contract information of the CPE and an encryption key included in the information acquired from the UDM 248. In addition, the control plane function group 240 performs processing such as generation of the encryption key.

That is, the control plane function group 240 determines whether to permit network connection according to whether the UDM 248 stores information of the CPE associated with a subscriber number referred to as International Mobile Subscriber Identity (IMSI), for example. Note that the IMSI is stored in a Subscriber Identity Module (SIM) card in the CPE, for example.

Here, Namf is a service-based interface provided by the AMF 241, and Nsmf is a service-based interface provided by the SMF 242. In addition, Nnef is a service-based interface provided by the NEF 245, and Npcf is a service-based interface provided by the PCF 247. Nudm is a service-based interface provided by the UDM 248, and Naf is a service-based interface provided by the AF 249. Nnrf is a service-based interface provided by the NRF 246, and Nnssf is a service-based interface provided by the NSSF 244. Nausf is a service-based interface provided by the AUSF 243. Each of these network functions (NFs) exchanges information with another NF via each service-based interface.

In FIG. 8, N1 is a reference point between the CPE and the AMF 241, while N2 is a reference point between the RAN/AN and the AMF 241. N4 is a reference point between the SMF 242 and the UPF 221, and information is exchanged between these network functions (NFs).

The core network CN is provided with an interface used in transmitting information and controlling functions via an Application Programming Interface (API), referred to as service-based interface.

The API enables designation of a resource, and operations on the resource, such as GET (resource acquisition), POST (creation of resource and addition of data), PUT (create resource, update resource), and DELETE (resource deletion). Such a function is typically used in the technical field related to the Web, for example.

Note that an example of the CPE in FIG. 8 is the communication device 40 of the present embodiment. An example of the RAN/AN is the base station 30 of the present embodiment. The management device 20 illustrated in FIG. 4 is an example of a device having a function of the AF 249 or the AMF 241/SMF 242, for example.

### <<4. Operation of communication system>>

The configuration of the communication system 1 of the present embodiment has been described above. Next, the operation of the communication system 1 having such a configuration will be described. The operation is classified into a case where the user uses an IPv4 address for communication and a case where the user uses an IPv6 address for communication.

### <4-1. Case using IPv4 address>

First, an operation of the communication system 1 in a case where the user uses an IPv4 address will be described.

The IPv4 address includes a global IPv4 address and a private IPv4 address. The global IPv4 address required for Internet communication is currently exhausted. Therefore, in order for the user to implement communication using an IPv4 address, the communication device needs to assign a currently available private IPv4 address and an IPv6 address to individual communication devices, and needs to perform a shared use of the IPv4 global IP address among a plurality of communication devices using various address translation technologies. Examples of the address translation technology of the IPv4 address include Network Address Translation 444 (NAT 444), Mapping of Address and Port Encapsulation (MAP-E), and Dual-Stack Lite (DS-Lite), although MAP-E and DS-Lite are not compatible with the current 5G module. In view of this, in the present embodiment, the address translation technology to be used for the IPv4 address is supposed to be NAT 444 as an example. Note that the address translation technology applied to the communication system 1 of the present embodiment is not limited to NAT 444.

### <4-1-1. Outline of operation>

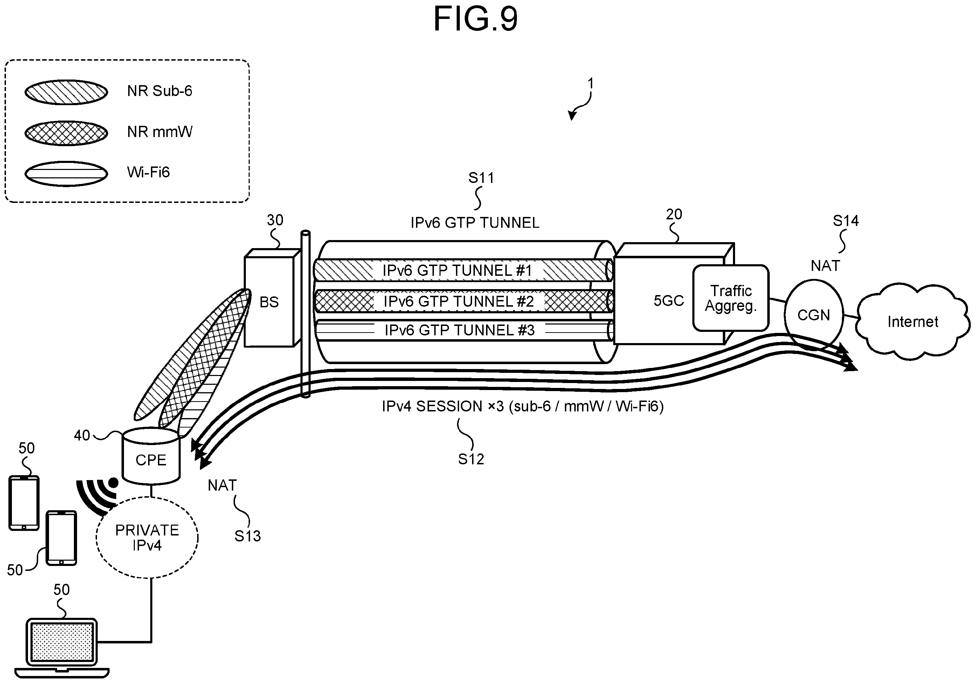

FIG. 9 is a diagram illustrating an outline of an operation of the communication system 1 in a case where the user uses an IPv4 address. The communication system 1 includes a management device 20, a base station 30, a communication device 40, and a terminal device 50. In the example of FIG. 9, the management device 20 is illustrated as a 5G core (5GC), the base station 30 as a base station (BS), the communication device 40 as a customer premises equipment (CPE), and the terminal device 50 as a user equipment (UE). A Carrier Grade NAT (CGN) illustrated in FIG. 9 is a function of network address translation performed near a demarcation point with another network (for example, the Internet). The function of the CGN may be included in the management device 20 or may be included in another device. In the example of FIG. 9, the communication device 40 is connected to the terminal device 50 by a private IPv4 address, and relays communication between the terminal device 50 and the base station 30.

First, the communication device 40 establishes a plurality of radio links with the base station 30. In the example of FIG. 9, the plurality of radio links to be established correspond to three links, which include a radio link using the NR Sub-6 (4.8 GHz), a radio link using the NR mmW (28 GHz), and a radio link using Wi-Fi 6.

The management device 20 and the base station 30 establish a plurality of tunnels corresponding to a plurality of radio links between the communication device 40 and the base station 30. Here, the tunnel is a virtual line connecting two points on the network. In the example of FIG. 9, all of the plurality of tunnels between the management device 20 and the base station 30 are IPv6 GPRS Tunneling Protocol Tunnel (IPv6 GTP tunnel). Note that the IPv6 GTP tunnel may be an IPv4 GPRS Tunneling Protocol Tunnel (IPv4 GTP tunnel). In the example of FIG. 9, the management device 20 and the base station 30 establish three IPv6 GTP tunnels corresponding to three radio links between the communication device 40 and the base station 30 (Step S11). In the example of FIG. 9, IPv6 GTP tunnel #1 corresponds to the radio link of the NR Sub-6, IPv6 GTP tunnel #2 corresponds to the radio link of the NR mmW, and IPv6 GTP tunnel #3 corresponds to the radio link of Wi-Fi 6. Note that the plurality of tunnels between the management device 20 and the base station 30 may be IPv4 GTP tunnels instead of IPv6 GTP tunnels.

In the present embodiment, the management device 20 and the base station 30 establish IPv4 sessions individually on the three IPv6 GTP tunnels. This establishes three IPv4 sessions passing through each of the three IPv6 tunnels, between the communication device 40 and the management device 20 (Step S12).

Using Network Address Translation (NAT), the communication device 40 performs address translation of data transmitted using the private IPv4 address from the terminal device 50 (Step S13). Subsequently, the communication device 40 transmits the data over three radio links by distributed transmission. The CGN performs address translation of the data from the communication device 40 by NAT (NAT 444 from the viewpoint of the end user) and transmits the translated data to the server 10 on the Internet.

### <4-1-2. Details of operation>

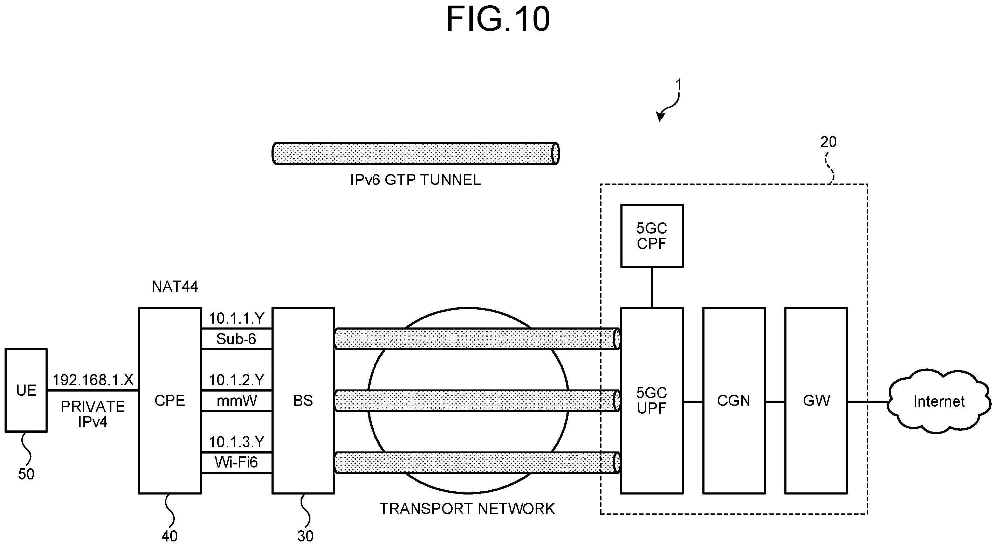

The outline of the operation of the communication system 1 has been described above. Next, the operation of the communication system 1 will be described in detail. FIG. 10 is a diagram illustrating an operation of the communication system 1 in a case where the user uses the IPv4 address. Similarly to FIG. 9, the management device 20 is illustrated as 5GC, the base station 30 as BS, the communication device 40 as CPE, and the terminal device 50 as UE.

First, the communication device 40 allocates a private IPv4 address to the terminal device 50 through a dynamic host configuration protocol (DHCP). The communication device 40 may allocate a static private IPv4 address to the terminal device 50. In the example of FIG. 10, the communication device 40 allocates 192.168.1.X to the terminal device 50. The communication device 40 establishes a plurality of radio links with the base station 30. Similarly to the example of FIG. 9, the plurality of radio links to be established includes three radio links: a radio link using the NR Sub-6 (4.8 GHz), a radio link using the NR mmW (28 GHz), and a radio link using Wi-Fi 6. The management device 20 establishes an IPv6 GTP tunnel managed by 5GC on each of the three radio links and allocates a unique IPv4 address to each. In the example of FIG. 10, the management device 20 allocates 10.1.1.Y, 10.1.2.Y, 10.1.3.Y individually to the three radio links.

The base station 30 operates the Wi-Fi 6 AP in an L2 bridge mode. Under this condition, the base station 30 establishes a special GTP tunnel with the 5GC. At this time, the base station 30 establishes, between the 5GC, three IPv6 GTP tunnels corresponding to three radio links between the communication device 40 and the base station 30.

The communication device 40 receives data (one or a plurality of IPv4 packets) transmitted using the private IPv4 address from the terminal device 50. The communication device 40 performs address translation by NAT using the IPv4 address allocated from the 5GC. Subsequently, the communication device 40 transmits the data over three radio links by distributed transmission.

The base station 30 transmits the IPv4 packet received from the communication device 40 to the 5GC UPF of the management device 20. At this time, the base station 30 transmits the IPv4 packet to the 5GC UPF by using the IPv6 GTP tunnel corresponding to the used radio link. For example, in a case where the IPv4 packet has been transmitted by the NR Sub-6, the base station 30 transmits the IPv4 packet to the 5GC UPF by using the IPv6 GTP tunnel #1 illustrated in FIG. 9. In a case where the IPv4 packet has been transmitted by the NR mmW, the base station 30 transmits the IPv4 packet to the 5GC UPF by using the IPv6 GTP tunnel #2 illustrated in FIG. 9. In a case where the IPv4 packet has been transmitted by Wi-Fi 6, the base station 30 transmits the IPv4 packet to the 5GC UPF by using the IPv6 GTP tunnel #3 illustrated in FIG. 9.

The management device 20 receives the IPv4 packet that has passed through the GTP tunnel. The header information of the GTP tunnel is removed by the 5GC UPF. The data distributed by the communication device 40 is transmitted to the server 10 on the Internet via network devices such as the 5GC UPF, CGN or the GW. Note that NAT and logging are performed in the CGN at a level higher than 5GC. The reply data from the server 10 is transmitted to the IPv4 address used as transmission source information at the time of transmission, as a transmission to the terminal device 50 through the tunnel and the radio link selected at the time of transmission.

### <4-1-3. Operation mode>

The communication device 40 according to the present embodiment has a plurality of operation modes. The communication device 40 performs communication using one of a plurality of operation modes according to an application, each link characteristic, or the like. The plurality of operation modes include: a first mode in which transmission data from the terminal device 50 is distributed over a plurality of radio links so as to be transmitted to the core network; and a second mode in which transmission data from the terminal device 50 is transmitted to the core network using one radio link of the plurality of radio links.

### (First mode)

In the first mode, the communication device 40 transmits transmission data from the terminal device 50 over a plurality of radio links by distributed transmission in accordance with a predetermined condition. At this time, the communication device 40 may distribute the transmission data from the terminal device 50 over a plurality of radio links based on destination information. Note that the communication device 40 may distribute the transmission data from the terminal device 50 in units of flow and session or in units of packets. An assumable specific example of the first mode is a broadband implementation mode (broadband mode) illustrated in (1) in the following.

### (1) Broadband implementation mode (broadband mode)

In this mode, the communication device 40 uses the source/destination IP address information and the communication port number information (5-Tuple) of each communication session so as to distribute the transmission data over appropriate radio links. This enables all radio links to be used at the same time, maximizing the throughput.

### (Second mode)

In the second mode, the communication device 40 selects one radio link to be used for transmission of transmission data from among a plurality of radio links in accordance with a predetermined condition. For example, the communication device 40 may select one radio link from a plurality of radio links based on communication quality information regarding each of the plurality of radio links. Specific examples of the second mode include: a priority link designation mode (priority mode) illustrated in (2) below; and an application mode illustrated in (3) below.

### (2)Priority link designation mode (priority mode)

In this mode, the communication device 40 holds priority information in which each radio link (Sub-6/mmW/Wi-Fi 6) is prioritized. The prioritization may be performed based on user setting. The communication device 40 selects one radio link to be used for data transmission from among the plurality of radio links based on the priority information. The communication device 40 may include a function to perform fallback (switching) to another radio link; Specifically, in a case where the radio quality/communication quality of a high priority link has degraded, it is allowable for the communication device 40 to switch to a radio link with a different priority level.

### (3) Application mode

This is a mode used for communication of a specific application. In this mode, communication of an application (or terminal) requiring VoIP or real-time communication is transferred to a 5G NR low latency radio link, for example. In this mode, the communication device 40 selects one radio link to be used for data transmission based on information regarding an application used to transmit data. Alternatively, the communication device 40 selects one radio link to be used for data transmission based on MAC address or IP address information of the terminal device 50.

### <4-2. Case using IPv6 address>

Next, an operation of the communication system 1 in a case where the user uses an IPv6 address will be described.

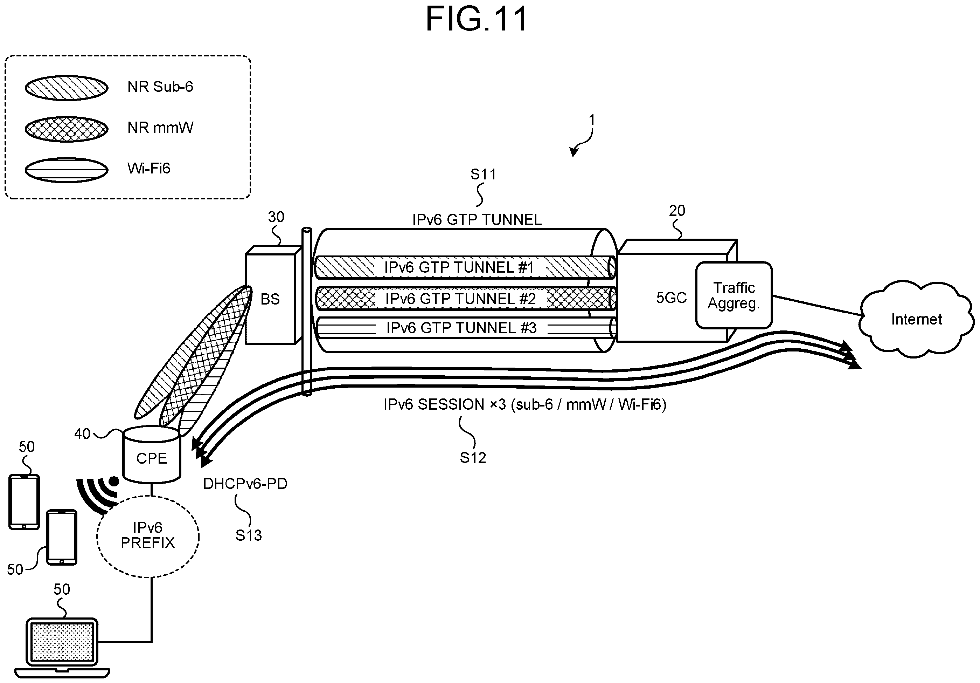

FIG. 11 is a diagram illustrating an outline of an operation of the communication system 1. In the 5G network, an IPv6 address is fundamentally supported. Therefore, also in a case where the user uses the IPv6 address, the communication system 1 desirably operates similarly to the case where the user uses the IPv4 address (FIG. 9). Here, Steps S11 to S13 illustrated in FIG. 11 correspond to Steps S11 to S13 illustrated in FIG. 9, respectively. In the example of FIG. 11, an IPv6 prefix on the WAN side and an IPv6 prefix on the LAN side are different. In contrast to the example of FIG. 9 in which the communication device 40 establishes three IPv4 sessions with the management device 20, the communication device 40 in the example of FIG. 11 establishes three IPv6 sessions.

As illustrated in the example of FIG. 9 in a case where the IPv4 address is to be used, the IP address segment (domain) between the 5GC and the CPE and the IP address segment (domain) for the terminal device 50 subordinate to the CPE are desirably configured as a separate segment. In a fixed-line Internet service such as FTTH, DHCP IPv6 for Prefix Delegation: RFC 8415 (DHCPv6-PD) is used to implement this configuration. However, in cellular communication technologies such as LTE and NR, IPv6 address handling for UE is currently performed only with Stateless Address Auto Configuration (SLAAC). For example, according to the 3GPP spec 23.501, the IPv6 address handling for the UE includes only address assignment using SLAAC/RFC 4862 and RS/RA and delivery of additional information by RFC 3736 and Stateless DHCPv6. This makes it difficult to implement a configuration that it to be ideally provided, as illustrated in FIG. 11, for example.

Accordingly, the communication system 1 of the present embodiment operates as follows.

### <4-2-1. Outline of operation>

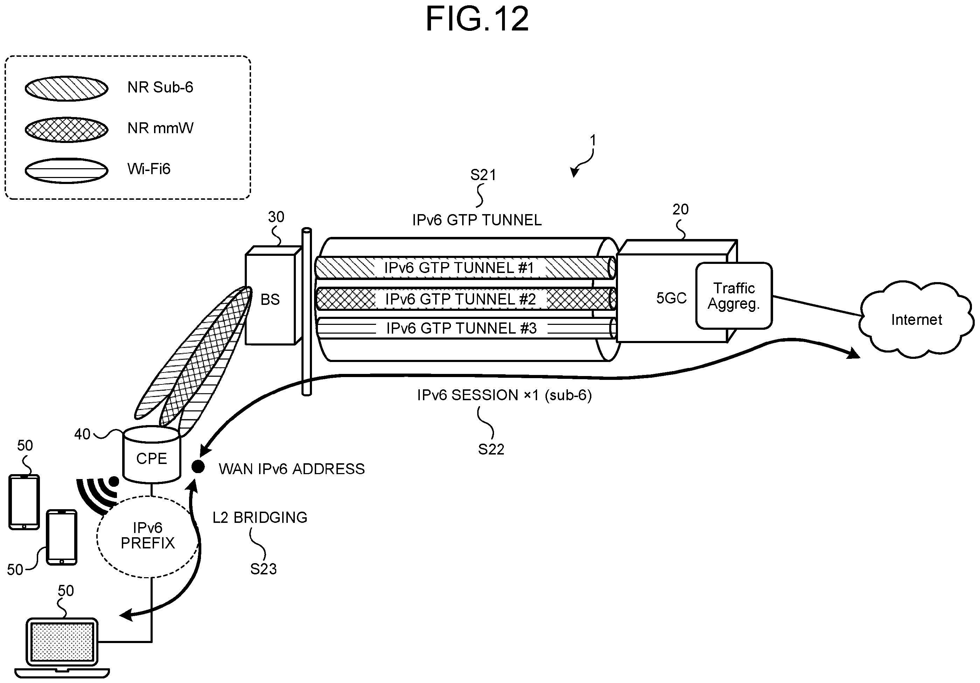

FIG. 12 is a diagram illustrating an outline of an operation of the communication system 1 in a case where the user uses an IPv6 address. The communication system 1 includes a management device 20, a base station 30, a communication device 40, and a terminal device 50. In the example of FIG. 12, the management device 20 is illustrated as 5GC, the base station 30 as BS, the communication device 40 as CPE, and the terminal device 50 as UE. In the example of FIG. 12, the communication device 40 is connected to the terminal device 50 with one IPv6 Prefix (corresponding to a segment in an IPv4 address), and relays communication between the terminal device 50 and the base station 30. In the example of FIG. 12, the CPE performs bridging according to the 3GPP spec 23.501. This allows the WAN side and the LAN side to have an identical prefix configuration.

First, the communication device 40 establishes a plurality of radio links with the base station 30. In the example of FIG. 12, the plurality of radio links to be established correspond to three links, which include a radio link using the NR Sub-6 (4.8 GHz), a radio link using the NR mmW (28 GHz), and a radio link using Wi-Fi 6.

The management device 20 and the base station 30 establish a plurality of IPv6 GTP tunnels corresponding to a plurality of radio links between the communication device 40 and the base station 30. Each of the plurality of tunnels between the management device 20 and the base station 30 is an IPv6 GTP tunnel. In the example of FIG. 12, the management device 20 and the base station 30 establish three IPv6 GTP tunnels corresponding to three radio links between the communication device 40 and the base station 30 (Step S21). In the example of FIG. 12, the IPv6 GTP tunnel #1 corresponds to the radio link of the NR Sub -6, the IPv6 GTP tunnel #2 corresponds to the radio link of the NR mmW, and the IPv6 GTP tunnel #3 corresponds to the radio link of Wi-Fi 6.

In the present embodiment, an IPv6 address is assigned to the communication device 40 by the SLAAC from the 5GC of the management device 20. With this operation, the communication device 40 establishes one IPv6 session with the management device 20 (Step S22). The communication device 40 performs L2 bridging to relay the communication between the terminal device 50 and the management device 20 (Step S23).

### <4-2-2. Details of operation 1>

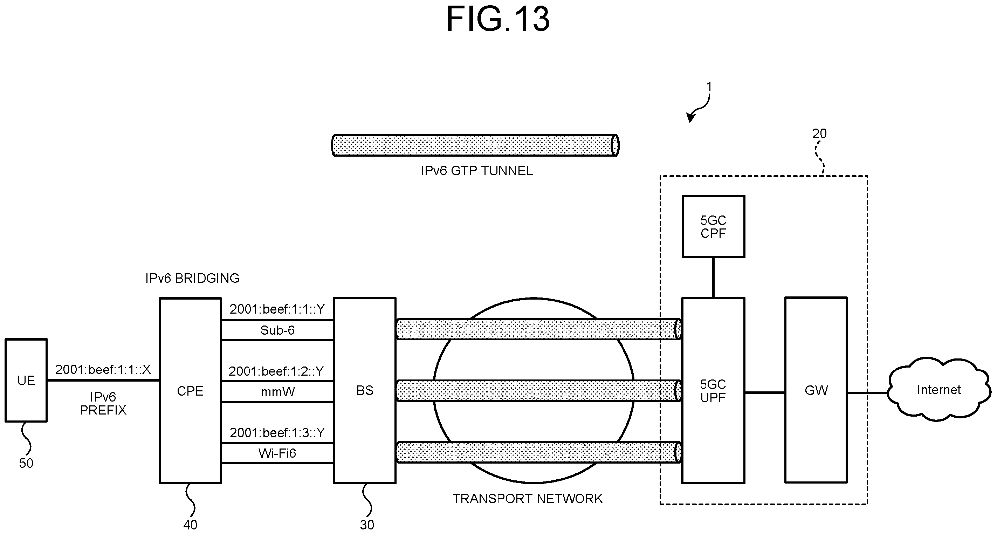

The outline of the operation of the communication system 1 has been described above. Next, the operation of the communication system 1 will be described in detail. FIG. 13 is a diagram illustrating an operation of the communication system 1 in a case where the user uses the IPv6 address. Similarly to FIG. 12, the management device 20 is illustrated as 5GC, the base station 30 as BS, the communication device 40 as CPE, and the terminal device 50 as UE.

First, the communication device 40 establishes a plurality of radio links with the base station 30. Similarly to the example of FIG. 12, the plurality of radio links to be established includes three radio links: a radio link using the NR Sub-6 (4.8 GHz), a radio link using the NR mmW (28 GHz), and a radio link using Wi-Fi 6. The management device 20 establishes an IPv6 GTP tunnel managed by 5GC on each of the three radio links and allocates a unique IPv6 address prefix to each. In the example of FIG. 13, the management device 20 allocates 2001: beef: 1: 1:: Y, 2001: beef: 1: 2:: Y, and 2001: beef: 1: 3:: Y to each of the three radio links. Subsequently, the communication device 40 performs L2 bridging on one of the above-described IPv6 address prefixes with respect to the terminal device 50, whereby the terminal device 50 acquires the IPv6 address prefix. In the case of FIG. 13, by the L2 bridging on the radio link using the NR Sub -6 performed by the communication device 40, the IPv6 address prefix to be acquired by the terminal device 50 is to be allocated by the management device 20. In the example of FIG. 13, the management device 20 allocates 2001: beef: 1: 1:: X to the terminal device 50.

The communication device 40 receives data (one or a plurality of IPv6 packets) transmitted from the terminal device 50 using the IPv6 address. Subsequently, the communication device 40 transmits the data over three radio links by distributed transmission. The base station 30 transmits the IPv6 packet received from the communication device 40 to the 5GC UPF of the management device 20.

The management device 20 receives the IPv6 packet that has passed through the GTP tunnel. The header information of the GTP tunnel is removed by the 5GC UPF. Subsequently, the data distributed by the communication device 40 is transmitted to the server 10 on the Internet via 5GC UPF and GW. The reply data from the server 10 is transmitted to the IPv6 address used as transmission source information at the time of transmission, as a transmission to the terminal device 50 through the tunnel and the radio link selected at the time of transmission.

### <4-2-3. Details of operation 2>

The above operation has the following problems (1) and (2) .
(1) When the UE uses only the IPv6 prefix for the Sub-6 link, the whole communications pass through the Sub-6 link alone. In this case, the communication system 1 cannot distribute traffic.
(2) When an IPv6 prefix of all radio links is bridged in the CPE to perform IPv6 address distribution onto the UE, a communication link is determined based on an address selection rule on the UE side. In this case, communication control cannot be performed by businesses, organizations, or communication providers that intend to provide a communication service using the communication system 1.

A conceivable solution to the above problem would be to perform address translation (NAT 66 or the like) on an IPv6 address in the CPE. However, currently, a chip on the CPE does not support the NAT 66. Furthermore, it is also conceivable to perform address translation in units of CPE/communication session (5-Tuple) by 5GC in which an IPv6 address prefix is allocated. However, this method would increase information to be held in 5GC to an enormous volume, leading to low scalability.

In view of these, the present embodiment is provided to solve the above problem by linking the CPE and the BS. Specifically, the communication system 1 of the present embodiment operates as follows.

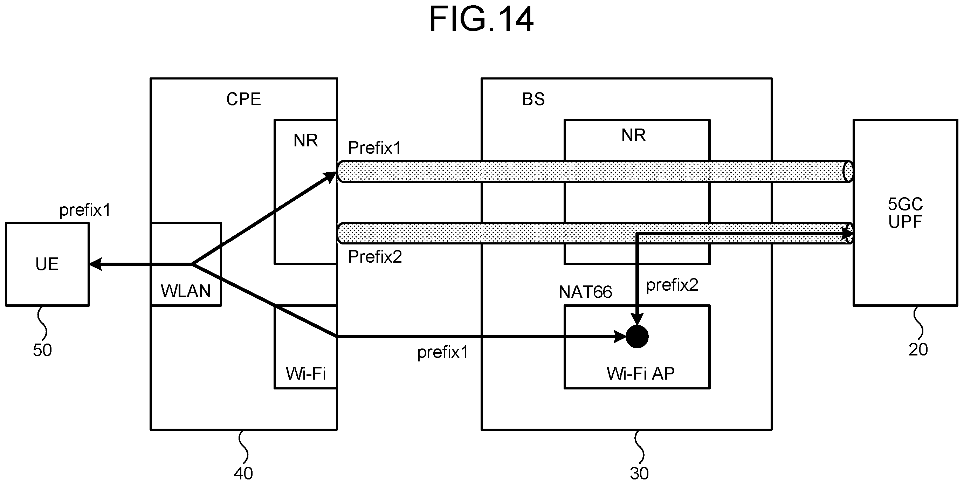

FIG. 14 is a diagram illustrating an operation of the communication system 1 in a case where a user uses the IPv6 address. Similarly to FIG. 12, the management device 20 is illustrated as 5GC, the base station 30 as BS, the communication device 40 as CPE, and the terminal device 50 as UE. While the FIG. 12 illustrates an example in which three radio links of the NR Sub-6, the NR mmW, and the Wi-Fi 6 are established between the base station 30 and the communication device 40, FIG. 14 is an example in which the NR has Sub-6 alone for facilitate understanding.

The communication device 40 establishes a plurality of IPv6 GTP tunnels with the management device 20 (5GC UPF) and then establishes a plurality of IPv6 sessions in each of the IPv6 GTP tunnels. Among the two radio links using NR Sub-6 and Wi-Fi 6 and established between the communication device 40 and the base station 30, a location corresponding to the radio link of the NR Sub-6 is used by the communication device 40 to establish IPv6 GTP tunnels and IPv6 sessions for the two links namely, NRs Sub-6 and the Wi-Fi 6 lines. The communication device 40 communicates with the terminal device 50 by using an IPv6 address for one of the plurality of IPv6 sessions. Note that the communication segment used by the communication device 40 and the terminal device 50 for communication also performs L2 bridging onto the Wi-Fi 6 radio link established between the communication device 40 and the base station 30 so as to be connected to the Wi-Fi AP portion of the base station 30.

In the example of FIG. 14, the communication device 40 establishes two IPv6 GTP tunnels with the management device 20 (5GC UPF). The first of the two is an IPv6 GTP tunnel for the NR link, to which Prefix 1 is allocated from 5GC. The second is an IPv6 GTP tunnel for Wi-Fi 6, to which Prefix 2 is allocated from 5GC. In the example of FIG. 14, two sessions are established. However, when there are three radio links, the communication device 40 establishes three IPv6 sessions.

In the example of FIG. 14, the communication device 40 communicates with the terminal device 50 using prefix 1. In communication using the NR Sub-6 radio link, the communication device 40 bridges Prefix 1 and prefix 1. On the other hand, in the communication using the Wi-Fi 6 radio link, the communication device 40 performs L2 extension of prefix 1 to the Wi-Fi AP section of the base station 30. In the example of FIG. 14, the base station 30 bridges Prefix 2 and prefix 2 established for the Wi-Fi 6 radio link, and performs address translation on prefix 1 and prefix 2 by NAT 66 in the Wi-Fi AP section. This enables communication between the terminal device 50 and the management device 20 using the Wi-Fi 6 link.

The communication device 40 distributes data from the terminal device 50 to a plurality of radio links.

### <4-2-4. Operation mode>

Even when the user uses the IPv6 address, the communication device 40 may have a plurality of operation modes. The operation mode may include a first mode and a second mode, similarly to the case where the user uses an IPv4 address. At this time, the first mode may be the above-described (1) Broadband implementation mode. Furthermore, the second mode may be the above-described (2) Prioritized link specifying mode or (3) Application mode.

### <<5. Throughput test>>

The configuration of the communication system 1 of the present embodiment has been described above. Next, a result of a test of estimated throughput for the communication system having the configuration of the present embodiment will be described.

It is assumed that the band of the WAN side Sub-6 radio link and the Wi-Fi 6 radio link and the communication rate of the LAN side 2.5 GE-wired LAN and WLAN are as follows. Note that these values are merely exemplary values for description in this document, not indicating the minimum and maximum rates of an actual product.
Band of WAN side sub-6 radio link
   Uplink: 280 Mbps
   Downlink: 1.5 Gbps
Band of WAN side Wi-Fi 6 radio link
   Uplink: 1.2 Gbps
   Downlink: 1.2 Gbps
Band of LAN side 2.5GE- wired LAN link
   Uplink: 2.5 Gbps
   Downlink: 2.5 Gbps
Band of LAN side Wi-Fi 6 radio link
   Uplink: 1.2 Gbps
   Downlink: 1.2 Gbps

### (1) Scenario 1

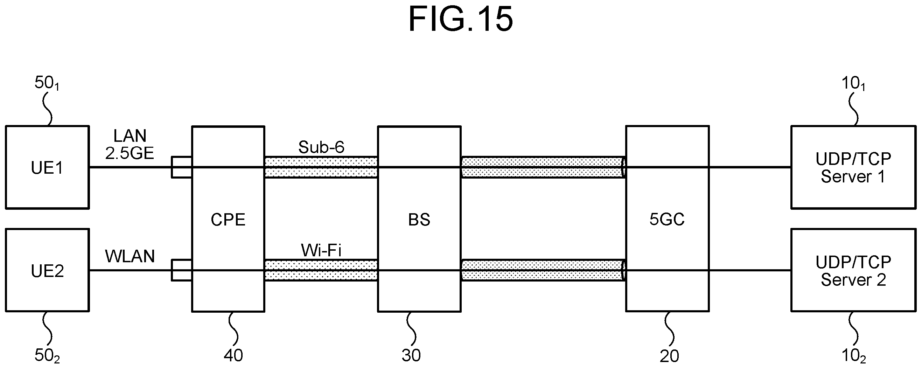

FIG. 15 is a diagram illustrating a configuration of Scenario 1 of a throughput test. In this scenario, there are two UEs, one of which being connected to a 2.5 GE-wired LAN, the other being connected to a Wireless Local Area Network (WLAN). Each UE performs communication with a UDP/TCP server above the 5GC. In this scenario, UE1 in the wired LAN is routed to the Sub-6 link. In addition, a UE 2 connected to the WLAN is routed to the Wi-Fi 6 link. In this case, the throughput estimated in each UE is as follows.
UE1: Band value of WAN side Sub-6
   Uplink: 280 Mbps
   Downlink: 1.5 Gbps
UE2: Band value of WAN-side Wi-Fi 6
   Uplink: 1.2 Gbps,
   Downlink: 1.2 Gbps

In Scenario 1, when the band is considered as a communication band of the entire communication device 40, each value can also be considered as the sum of UE1 and UE2. In this case, the sum of the uplink communication bands amounts to 1.48 Gbps, while the sum of the downlink communication bands is 2.7 Gbps.

### (2) Scenario 2

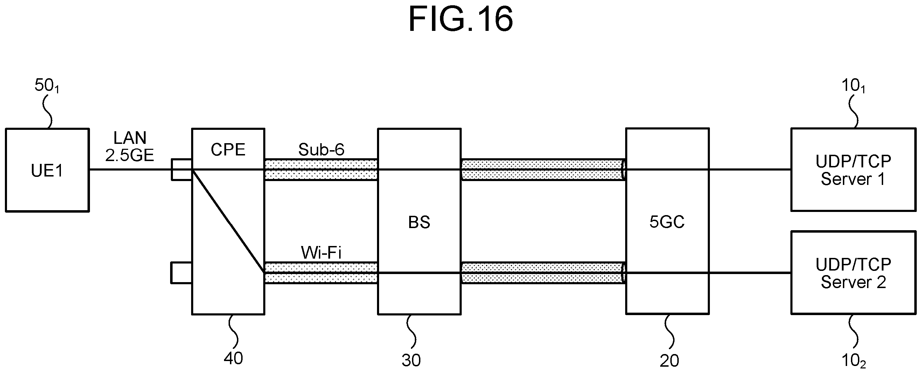

FIG. 16 is a diagram illustrating a configuration of Scenario 2 of the throughput test. In this scenario, one UE 1 is connected to a 2.5 GE-wired LAN. Two UDP/TCP connections are established, one of which being established between UE 1 and UDP/TCP Server 1, the other established between UE1 and UDP/TCP Server 2. The communication packet from the UE 1 is distributed to the Sub-6 and Wi-Fi 6 on a connection basis. In this case, the throughput estimated in the UE 1 is as follows.

UE1
Uplink: 1.48 Gbps
Downlink: 2.5 Gbps

In Scenario 2, the uplink band is expected to be the sum (1.48 Gbps) of the Wi-Fi 6 link band (1.2 Gbps) on the WAN side and the uplink band (280 Mbps) of the Sub6 link, and the downlink band is expected to be the sum (2.7 Gbps) of the Wi-Fi 6 link band (1.2 Gbps) on the WAN side and the downlink band (1.5 Gbps) of the Sub6 link but stays at the upper limit (2.5 Gbps) of the downlink band of the 2.5 GE-wired LAN link.

### (3) Scenario 3

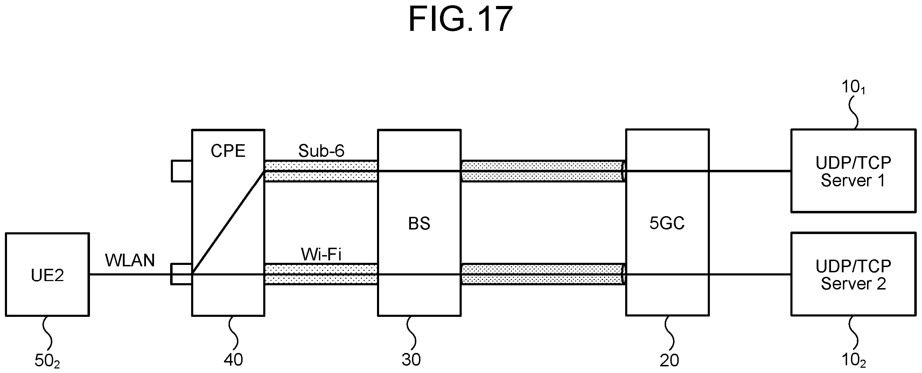

FIG. 17 is a diagram illustrating a configuration of Scenario 3 of the throughput test. In this scenario, one UE 2 is connected to the WLAN. Two UDP/TCP connections are established, one of which being established between UE1 and UDP/TCP Server 1, the other established between UE1 and

UDP/TCP Server2. The communication packet from the UE 2 is distributed to the Sub-6 and Wi-Fi 6 on a connection basis. In this case, the throughput assumed in UE2 is as follows.

UE2
Uplink: 1.2 Gbps
Downlink: 1.2 Gbps

In Scenario 3, the sum of the bands of the Wi-Fi 6 link and the Sub-6 link on the WAN side is 1.48 Gbps on the uplink and 2.7 Gbps on the downlink. However, since the band on the LAN side (WLAN) is uplink/downlink 1.2 Gbps, an upper limit value of the band on the LAN side (WLAN) is expected as a result of the throughput test.

### <<6. Modification>>

The above-described embodiment is an example, and various modifications and applications are possible.

For example, the above-described embodiment, the communication device 40 establishes the Wi-Fi 6 link as one of the plurality of radio links with the base station 30. However, the Wi-Fi link is not limited to the Wi-Fi 6 link, and may be another wireless LAN link such as the Wi-Fi 5 link. In addition, the plurality of radio links established between the communication device 40 and the base station 30 is not limited to the NR link or the wireless LAN link. The plurality of radio links may include radio links of other communication standards such as Bluetooth (registered trademark).

Furthermore, although the above embodiment has described a case where the communication device 40 is CPE, the communication device 40 is not limited to CPE. The communication device 40 may be a relay device other than CPE. Furthermore, the communication device 40 is not limited to a relay device that relays communication of the terminal device 50. The communication device 40 may be a device that has an application function and transmits data based on a communication request from the application function over a plurality of radio links by distributed transmission.

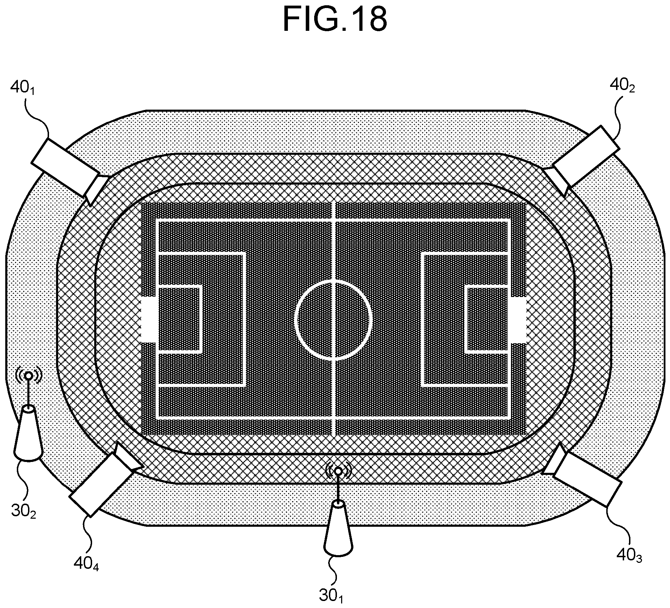

FIG. 18 is a diagram illustrating a modification of the communication device 40. In the example illustrated in FIG. 18, the communication device 40 is an imaging device installed in a stadium. A plurality of radio links is established between the communication device 40 and the base station 30, and a plurality of GTP tunnels is established between the base station 30 and the management device 20 (not illustrated). The communication device 40 has an imaging function as an application function, and transmits video data captured using the imaging function to the server 10 on a network via the base station 30. At this time, as described in the present embodiment, the communication device 40 transmits the video data by a distributed transmission over a plurality of radio links. Alternatively, the communication device 40 selects one radio link to be used for transmission of the video data from among the plurality of radio links based on information regarding the communication quality of each of the plurality of radio links, and transmits the video data using the selected radio link.

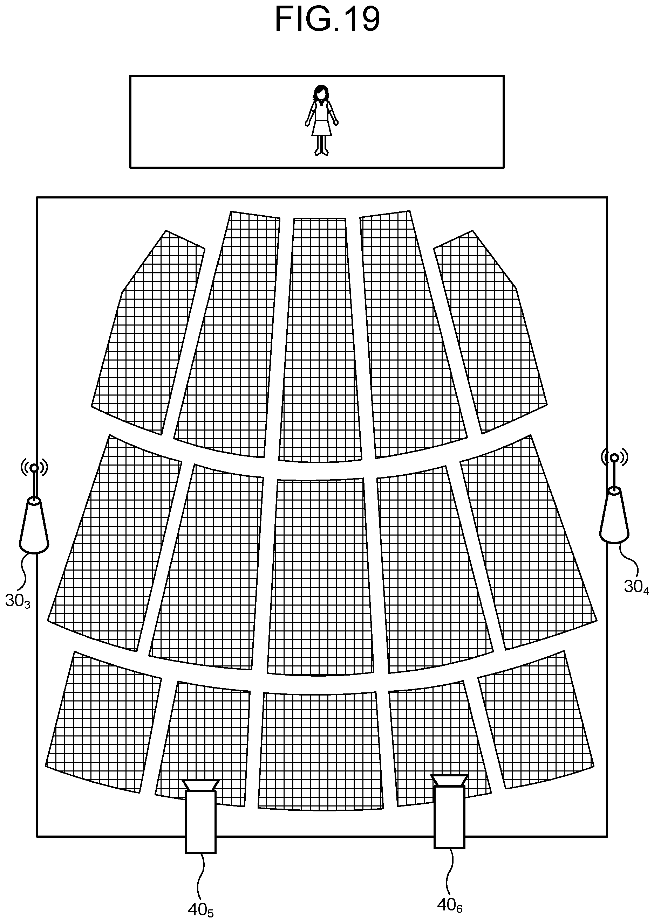

FIG. 19 is a diagram illustrating another modification of the communication device 40. In the example illustrated in FIG. 19, the communication device 40 is an imaging device installed in a live venue. A plurality of radio links is established between the communication device 40 and the base station 30, and a plurality of GTP tunnels is established between the base station 30 and the management device 20 (not illustrated). The communication device 40 has an imaging function as an application function, and transmits video data captured using the imaging function to the server 10 on a network via the base station 30. At this time, as described in the present embodiment, the communication device 40 transmits the video data by a distributed transmission over a plurality of radio links. Alternatively, the communication device 40 selects one radio link to be used for transmission of the video data from among the plurality of radio links based on information regarding the communication quality of each of the plurality of radio links, and transmits the video data using the selected radio link.

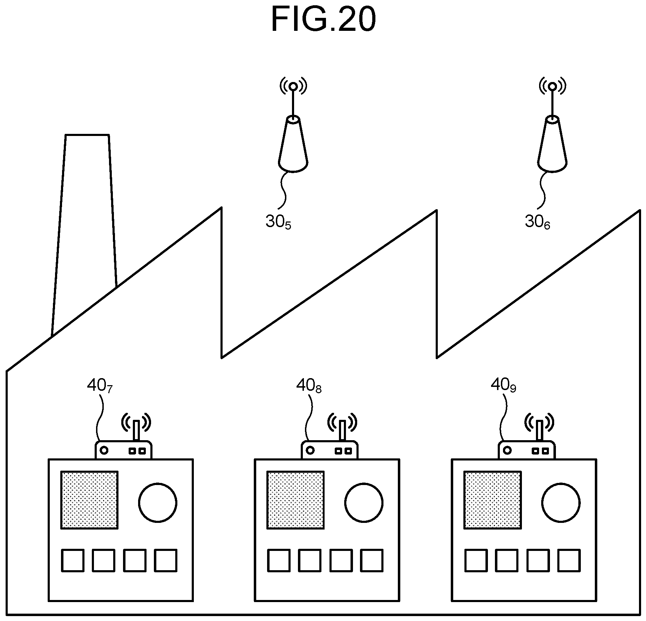

FIG. 20 is a diagram illustrating another modification of the communication device 40. In the example illustrated in FIG. 20, the communication device 40 is a sensor device installed in a factory. A plurality of radio links is established between the communication device 40 and the base station 30, and a plurality of GTP tunnels is established between the base station 30 and the management device 20 (not illustrated). The communication device 40 has various sensing functions as application functions, and transmits sensing data acquired using the sensing functions to the server 10 on a network via the base station 30. At this time, as described in the present embodiment, the communication device 40 transmits the sensing data by a distributed transmission over a plurality of radio links. Alternatively, the communication device 40 selects one radio link to be used for transmission of the sensing data from among the plurality of radio links based on information regarding the communication quality of each of the plurality of radio links, and transmits the video data using the selected radio link.

In addition, the communication device 40 may be a terminal device. In this case, the communication device 40 may include the function of the terminal device 50 described above in addition to the function of the communication device 40 of the present embodiment. At this time, an application-level function of the terminal device 50 may be regarded as the above-described application function.

The control device that controls the server 10, the management device 20, the base station 30, the communication device 40, and the terminal device 50 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control device. At this time, the control device may be a device (for example, a personal computer) external to the server 10, the management device 20, the base station 30, the communication device 40, or the terminal device 50. Furthermore, the control device may be a device (for example, the control unit 13, the control unit 23, the control unit 33, the control unit 43, or the control unit 53) inside the server 10, the management device 20, the base station 30, the communication device 40, or the terminal device 50.

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the portions other than the OS may be stored in a medium for distribution, or the portions other than the OS may be stored in a server device so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be arbitrarily altered unless otherwise specified. For example, a variety of information illustrated in each of the drawings are not limited to the information illustrated.

In addition, each of components of each device is provided as a functional and conceptional illustration and thus does not necessarily need to be physically configured as illustrated. That is, the specific form of distribution/integration of each of the devices is not limited to those illustrated in the drawings, and all or a part thereof may be functionally or physically distributed or integrated into arbitrary units according to various loads and use situations. This configuration by distribution and integration may be performed dynamically.

Furthermore, the above-described embodiments can be appropriately combined within a range implementable without contradiction of processing. Furthermore, the order of individual steps illustrated in the flowcharts of the above-described embodiment can be changed as appropriate.

Furthermore, for example, the present embodiment can be implemented as any configuration constituting a device or a system, for example, a processor as a large scale integration (LSI) or the like, a module using a plurality of processors or the like, a unit using a plurality of modules or the like, and a set obtained by further adding other functions to the unit, or the like (that is, a configuration of a part of the device).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a configuration of cloud computing in which one function is cooperatively shared and processed by a plurality of devices via a network.

### <<7. Conclusion>>

As described above, according to the present embodiment, the communication system 1 includes the communication device 40 connected to the server 10 on the Internet via the base station 30 and the management device 20. The communication device 40 has a plurality of wireless communication functions and is connected to the base station 30 by a plurality of radio links. The base station 30 establishes, between itself and the management device 20, a plurality of GTP tunnels corresponding to the plurality of radio links. The communication device 40 transmits transmission data (for example, a plurality of packets) to the server 10 via the base station 30 and the management device 20 by distributed transmission over a plurality of radio links in accordance with a predetermined condition. At this time, the communication device 40 distributes traffic by using an IP multipath routing technology in the IP layer, for example. Furthermore, the communication device 40 distributes a plurality of packets to the server 10 to a plurality of radio links based on destination information.

This increases the communication band to be used, enabling the communication device 40 to achieve high communication performance (for example, wide coverage, high throughput, high reliability, or low latency).

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.
(1) A communication device comprising:
   a setting unit that establishes a plurality of radio links with a base station; and
   a communication control unit that transmits transmission data to an outside via the base station and a core network,
   wherein a plurality of tunnels corresponding to the plurality of radio links is established between the base station and the core network, and
   the communication control unit transmits the transmission data over the plurality of radio links by distributed transmission in accordance with a predetermined condition.
(2) The communication device according to (1),
   having at least a first mode for transmitting the transmission data over the plurality of radio links by distributed transmission and a second mode for transmitting the transmission data using one of the plurality of radio links,
   wherein the communication control unit performs communication using one of a plurality of modes including at least the first mode and the second mode.
(3) The communication device according to (2),
   wherein the communication control unit transmits, in the first mode, the transmission data over the plurality of radio links by distributed transmission in units of packets.
(4) The communication device according to (2) or (3),
   wherein the communication control unit distributes, in the first mode, the transmission data over the plurality of radio links based on destination information.
(5) The communication device according to any one of (2) to (4),
   wherein the communication control unit selects, in the second mode, the one radio link to be used for transmission of the transmission data from among the plurality of radio links based on communication quality information regarding each of the plurality of radio links.
(6) The communication device according to any one of (1) to (5),
   wherein the communication device includes an application function, and
   the communication control unit transmits the transmission data from the application function over the plurality of radio links by distributed transmission in accordance with a predetermined condition.
(7) The communication device according to any one of (1) to (5),
   wherein the communication control unit transmits the transmission data from another device over the plurality of radio links by distributed transmission in accordance with a predetermined condition.
(8) The communication device according to (7),
   wherein the another device is a terminal device, and
   the communication control unit transmits the transmission data from the terminal device over the plurality of radio links by distributed transmission according to the predetermined condition.
(9) The communication device according to (8),
   wherein each of the plurality of tunnels between the base station and the core network is either an IPv6 GTP tunnel or an IPv4 GTP tunnel.
(10) The communication device according to (9),
   wherein the communication control unit performs processing including:
   establishing, with the core network, a plurality of IPv4 sessions through each of a plurality of the IPv6 GTP tunnels or a plurality of IPv4 GTP tunnels; and
   communicating with the terminal device by using an IPv4 address that has undergone address translation using a NAT technique.
(11) The communication device according to (9),
   wherein the communication control unit performs processing including:
   establishing a plurality of IPv6 sessions through each of a plurality of the IPv6 GTP tunnels with the core network; and
   communicating with the terminal device by using an IPv6 address for one of the plurality of IPv6 sessions.
(12) The communication device according to (11),
   wherein a session as many as a plurality of NR radio links has been established as the plurality of IPv6 sessions,
   an IPv6 GTP tunnel and an IPv6 session for Wi-Fi 6 have been established in addition to the plurality of radio links; and
   the base station is configured to bridge the transmission data from a Wi-Fi 6 radio link to one of the plurality of IPv6 sessions.
(13) The communication device according to any one of (7) to (12),
   wherein the another device is a Customer Premises Equipment (CPE).
(14) The communication device according to any one of (1) to (13),
   wherein the core network is a 5G Core (5GC).
(15) The communication device according to any one of (1) to (14),
   wherein the plurality of radio links includes at least a radio link based on 5G NR and a radio link based on a wireless LAN.
(16) A communication method comprising:
   a setting step of establishing a plurality of radio links with a base station; and
   a communication control step of transmitting transmission data to an outside via the base station and a core network,
   wherein a plurality of tunnels corresponding to the plurality of radio links is established between the base station and the core network, and
   the communication control step transmits the transmission data over the plurality of radio links by distributed transmission in accordance with a predetermined condition.
(17) A communication system comprising a communication device, a base station, and a core network,
   wherein the communication device includes:
   a setting unit that establishes a plurality of radio links with the base station; and
   a communication control unit that transmits transmission data to an outside via the base station and a core network over the plurality of radio links by distributed transmission in accordance with a predetermined condition,
   the base station and the core network
   establish a plurality of tunnels corresponding to the plurality of radio links between the base station and the core network, and
   the communication control unit transmits the transmission data over the plurality of radio links by distributed transmission in accordance with a predetermined condition.
(18) The communication system according to (17),
   wherein the communication control unit is configured to transmit, by using distributed transmission, the transmission data from the terminal device over the plurality of radio links in accordance with the predetermined condition,
   the plurality of tunnels between the base station and the core network are all IPv6 GTP tunnels, and
   the communication control unit performs processing including:
      establishing a plurality of IPv6 sessions through each of a plurality of the IPv6 GTP tunnels with the core network; and
      communicating with the terminal device by using an IPv6 address for one of the plurality of IPv6 sessions.
(19) The communication system according to (18),
   wherein a session as many as a plurality of NR radio links has been established as the plurality of IPv6 sessions,
   an IPv6 GTP tunnel and an IPv6 session for Wi-Fi 6 have been established in addition to the plurality of radio links; and
   the base station is configured to bridge the transmission data from a Wi-Fi 6 radio link to one of the plurality of IPv6 sessions.

### Reference Signs List

- 1: COMMUNICATION SYSTEM
- 10: SERVER
- 20: MANAGEMENT DEVICE
- 30: BASE STATION
- 40: COMMUNICATION DEVICE
- 50: TERMINAL DEVICE
- 11, 21: COMMUNICATION UNIT
- 31, 41, 51: WIRELESS COMMUNICATION UNIT
- 12, 22, 32, 42, 52: STORAGE UNIT
- 13, 23, 33, 43, 53: CONTROL UNIT
- 44, 54: NETWORK COMMUNICATION UNIT
- 311, 411, 511: TRANSMISSION PROCESSING UNIT
- 312, 412, 512: RECEPTION PROCESSING UNIT
- 313, 413, 513: ANTENNA
- 431: SETTING UNIT
- 432: COMMUNICATION CONTROL UNIT

## Claims

1. A communication device comprising:
a setting unit that establishes a plurality of radio links with a base station; and
a communication control unit that transmits transmission data to an outside via the base station and a core network,
wherein a plurality of tunnels corresponding to the plurality of radio links is established between the base station and the core network, and
the communication control unit transmits the transmission data over the plurality of radio links by distributed transmission in accordance with a predetermined condition.

2. The communication device according to claim 1,
having at least a first mode for transmitting the transmission data over the plurality of radio links by distributed transmission and a second mode for transmitting the transmission data using one of the plurality of radio links,
wherein the communication control unit performs communication using one of a plurality of modes including at least the first mode and the second mode.

3. The communication device according to claim 2,
wherein the communication control unit transmits, in the first mode, the transmission data over the plurality of radio links by distributed transmission in units of packets.

4. The communication device according to claim 2,
wherein the communication control unit distributes, in the first mode, the transmission data over the plurality of radio links based on destination information.

5. The communication device according to claim 2,
wherein the communication control unit selects, in the second mode, the one radio link to be used for transmission of the transmission data from among the plurality of radio links based on communication quality information regarding each of the plurality of radio links.

6. The communication device according to claim 1,
wherein the communication device includes an application function, and
the communication control unit transmits the transmission data from the application function over the plurality of radio links by distributed transmission in accordance with a predetermined condition.

7. The communication device according to claim 1,
wherein the communication control unit transmits the transmission data from another device over the plurality of radio links by distributed transmission in accordance with a predetermined condition.

8. The communication device according to claim 7,
wherein the another device is a terminal device, and
the communication control unit transmits the transmission data from the terminal device over the plurality of radio links by distributed transmission according to the predetermined condition.

9. The communication device according to claim 8,
wherein each of the plurality of tunnels between the base station and the core network is either an IPv6 GTP tunnel or an IPv4 GTP tunnel.

10. The communication device according to claim 9,
wherein the communication control unit performs processing including:
establishing, with the core network, a plurality of IPv4 sessions through each of a plurality of the IPv6 GTP tunnels or a plurality of IPv4 GTP tunnels; and
communicating with the terminal device by using an IPv4 address that has undergone address translation using a NAT technique.

11. The communication device according to claim 9,
wherein the communication control unit performs processing including:
establishing a plurality of IPv6 sessions through each of a plurality of the IPv6 GTP tunnels with the core network; and
communicating with the terminal device by using an IPv6 address for one of the plurality of IPv6 sessions.

12. The communication device according to claim 11,
wherein a session as many as a plurality of NR radio links has been established as the plurality of IPv6 sessions,
an IPv6 GTP tunnel and an IPv6 session for Wi-Fi 6 have been established in addition to the plurality of radio links; and
the base station is configured to bridge the transmission data from a Wi-Fi 6 radio link to one of the plurality of IPv6 sessions.

13. The communication device according to claim 7,
wherein the another device is a Customer Premises Equipment (CPE).

14. The communication device according to claim 1,
wherein the core network is a 5G Core (5GC).

15. The communication device according to claim 1,
wherein the plurality of radio links includes at least a radio link based on 5G NR and a radio link based on a wireless LAN.

16. A communication method comprising:
a setting step of establishing a plurality of radio links with a base station; and
a communication control step of transmitting transmission data to an outside via the base station and a core network,
wherein a plurality of tunnels corresponding to the plurality of radio links is established between the base station and the core network, and
the communication control step transmits the transmission data over the plurality of radio links by distributed transmission in accordance with a predetermined condition.

17. A communication system comprising a communication device, a base station, and a core network,
wherein the communication device includes:
a setting unit that establishes a plurality of radio links with the base station; and
a communication control unit that transmits transmission data to an outside via the base station and a core network over the plurality of radio links by distributed transmission in accordance with a predetermined condition,
the base station and the core network
establish a plurality of tunnels corresponding to the plurality of radio links between the base station and the core network, and
the communication control unit transmits the transmission data over the plurality of radio links by distributed transmission in accordance with a predetermined condition.

18. The communication system according to claim 17,
wherein the communication control unit is configured to transmit, by using distributed transmission, the transmission data from the terminal device over the plurality of radio links in accordance with the predetermined condition,
the plurality of tunnels between the base station and the core network are all IPv6 GTP tunnels, and
the communication control unit performs processing including:
establishing a plurality of IPv6 sessions through each of a plurality of the IPv6 GTP tunnels with the core network; and
communicating with the terminal device by using an IPv6 address for one of the plurality of IPv6 sessions.

19. The communication system according to claim 18,
wherein a session as many as a plurality of NR radio links has been established as the plurality of IPv6 sessions,
an IPv6 GTP tunnel and an IPv6 session for Wi-Fi 6 have been established in addition to the plurality of radio links; and
the base station is configured to bridge the transmission data from a Wi-Fi 6 radio link to one of the plurality of IPv6 sessions.
